# EUROPÄISCHE PATENTANMELDUNG

(11) **EP 4 621 273 A1**
(43) Veröffentlichungstag der Anmeldung: **24.09.2025**
(21) Anmeldenummer: 25164532.1
(22) Anmeldetag: 18.03.2025
(51) Int. Cl.: F16K 41/02

(54) **DICHTUNGSVORRICHTUNG FÜR EIN STELLGERÄT UND STELLGERÄT MIT DER DICHTUNGSVORRICHTUNG**

(30) Priorität: 22.03.2024 DE 102024108283
(71) Anmelder: PFEIFFER CHEMIE-ARMATURENBAU GmbH, 47906 Kempen (DE)
(72) Erfinder: Gartz, Michael, 47918 Tönisvorst (DE)
(74) Vertreter: noventive Patentanwaltsgesellschaft mbH

(57) **Zusammenfassung**

Es wird eine Dichtungsvorrichtung für ein Stellgerät (10a), insbesondere ein Dreh- oder Hubventil, mit einer Dichtungseinheit (22a) zu einem Abdichten eines durch ein Gehäuseteil (16a) des Stellgeräts und eine Stellstange, insbesondere eine Hubstange oder eine Welle, des Stellgeräts ausgebildeten Spalts gegenüber gasförmigen oder flüssigen Medien, insbesondere Helium, und mit einer Mittelachse (24a) vorgeschlagen, wobei die Dichtungseinheit eine Mehrzahl von im Wesentlichen ringförmig ausgebildeten Dichtelementen (38a, 40a, 42a) umfasst, die entlang der Mittelachse hintereinander und jeweils um die Mittelachse angeordnet sind, wobei die Mehrzahl der Dichtelemente zumindest ein erstes Dichtelement (38a) und zumindest ein zweites Dichtelement (40a) umfasst, wobei das zumindest eine erste Dichtelement und das zumindest eine zweite Dichtelement jeweils senkrecht zur Mittelachse betrachtet eine im Wesentlichen keilförmige Querschnittsfläche (44a, 46a) aufweisen, wobei das zumindest eine zweite Dichtelement über eine schräg zur Mittelachse ausgebildete Anlegefläche (48a) des zumindest einen zweiten Dichtelements an dem zumindest einen ersten Dichtelement anliegt, wobei die Mehrzahl der Dichtelemente jeweils zumindest größtenteils, insbesondere im Wesentlichen vollständig, aus einem Kunststoff, vorzugsweise einem Polymer, ausgebildet sind..

## Beschreibung

### Stand der Technik

Es sind bereits Dichtungsvorrichtungen für Stellgeräte bekannt, die über eine Anordnung aus mehreren geschichtet angeordneten Dichtringen einen zwischen einer Durchführung für ein Stellelement, insbesondere auch Stellstangen, des jeweiligen Stellgeräts und dem Stellelement gebildeten Spalt gegenüber flüssigen oder gasförmigen Medien abdichten. Besonders für gasförmige Medien, ganz besonders beispielweise für Helium, ist eine ausreichende Abdichtung schwierig zu realisieren. Je nach Anwendungsbereich der Stellgeräte dürfen bestimmte Leckage-Raten nicht überschritten werden, um für die jeweils benötigten Normen verifiziert bzw. für die jeweilige Anwendung zugelassen werden zu können.

Eine Aufgabe der Erfindung ist es eine Dichtungsvorrichtung zur Verfügung zu stellen, welche eine vorteilhaft hohe Dichtigkeit und gleichzeitig eine gewisse Kompaktheit und Kosteneffizienz bei der Herstellung aufweist.

### Vorteile der Erfindung

Es wird eine Dichtungsvorrichtung für ein Stellgerät, insbesondere ein Dreh- oder Hubarmatur, insbesondere ein Dreh- oder Hubventil, mit einer Dichtungseinheit zu einem Abdichten eines durch ein Gehäuseteil des Stellgeräts und eine Stellstange, insbesondere eine Hubstange oder eine Welle, des Stellgeräts ausgebildeten Spalts gegenüber gasförmigen oder flüssigen Medien, insbesondere Helium, und mit einer Mittelachse vorgeschlagen, wobei die Dichtungseinheit eine Mehrzahl von im Wesentlichen ringförmig ausgebildeten Dichtelementen umfasst, die entlang der Mittelachse hintereinander und jeweils um die Mittelachse angeordnet sind, wobei die Mehrzahl der Dichtelemente zumindest ein erstes Dichtelement und zumindest ein zweites Dichtelement umfasst, wobei das zumindest eine erste Dichtelement und das zumindest eine zweite Dichtelement jeweils senkrecht zur Mittelachse betrachtet eine im Wesentlichen keilförmige Querschnittsfläche aufweisen, wobei das zumindest eine zweite Dichtelement über eine schräg zur Mittelachse ausgebildete Anlegefläche des zumindest einen zweiten Dichtelements an dem zumindest einen ersten Dichtelement anliegt, wobei die Mehrzahl der Dichtelemente jeweils zumindest größtenteils, insbesondere im Wesentlichen vollständig, aus einem Kunststoff, vorzugsweise einem Polymer, ausgebildet sind.

Darunter, dass die Mehrzahl von Dichtelementen jeweils "zumindest größtenteils" aus einem oder dem einen Kunststoff, vorzugsweise einem oder dem einen Polymer, ausgebildet sind, soll insbesondere verstanden werden, dass die einzelnen Dichtelemente der Mehrzahl von Dichtelementen bezüglich eines Gewichts und/oder bezüglich eines Volumens zu mindestens über 50% aus dem einen Kunststoff, vorzugsweise dem einen Polymer, ausgebildet sind. Insbesondere ist denkbar, dass dem Kunststoff, insbesondere dem Polymer, wie beispielsweise M-PTFE oder PTFE, Mengen an einem oder mehreren zusätzlichen Füllstoff(en), Verstärkungsstoff(en) und/oder anderem/anderen Additiv(en) beigemischt sind, wobei insbesondere das Material der Dichtelemente als ein Compound ausgebildet ist. Beispielsweise ist denkbar, dass ein Material der Dichtelemente Anteile an Kohle oder Glasfaser umfasst. Dies kann insbesondere für eine Verwendung der Dichtungsvorrichtung für spezielle Medien sinnvoll sein. Darunter, dass die Mehrzahl von Dichtelementen jeweils "im Wesentlichen vollständig" aus einem oder dem einen Kunststoff, vorzugsweise einem oder dem einen Polymer, ausgebildet sind soll insbesondere verstanden werden, dass die einzelnen Dichtelemente der Mehrzahl von Dichtelementen bezüglich eines Gewichts und/oder bezüglich eines Volumens zu mindestens 90%, vorzugsweise zu mindestens 95% und besonders bevorzugt zu mindestens 98%, aus dem einen Kunststoff, vorzugsweise dem einen Polymer, ausgebildet sind. Insbesondere sind die Mehrzahl von Dichtelementen jeweils vollständig aus dem einen Kunststoff, vorzugsweise dem einen Polymer, ausgebildet. Alternativ ist denkbar, dass ein Teil der Mehrzahl von Dichtelementen oder die Mehrzahl von Dichtelementen jeweils zumindest bereichsweise eine Beschichtung oder einen Kern aufweisen, welcher aus einem anderen, vorzugsweise von dem einen Kunststoff, insbesondere dem einen Polymer, verschiedenen, Material ausgebildet ist.

Vorzugsweise erstrecken sich die Dichtelemente der Dichtungseinheit jeweils vollständig um die Mittelachse herum. Unter einer "im Wesentlichen keilförmige Querschnittsfläche" des zumindest einen ersten Dichtelements und des zumindest einen zweiten Dichtelements soll insbesondere eine Querschnittsfläche verstanden werden, welche zumindest zwei im Wesentlichen geradlinige Seiten aufweist, die sich direkt oder in einer gedachten Verlängerung der zwei Seiten in einem Punkt schneiden und an diesem Punkt einen Winkel kleiner 90°, vorzugsweise kleiner 70° und besonders bevorzugt kleiner 50°, aufspannen, wobei insbesondere die gedachten Verlängerungen der Seiten jeweils höchstens 20% einer gesamten Länge der jeweiligen Seite beträgt. Besonders bevorzugt weisen das zumindest eine erste Dichtelement und das zumindest eine zweite Dichtelement jeweils senkrecht zur Mittelachse betrachtet um die Mittelachse herum eine gleichbleibende Querschnittsfläche auf, insbesondere die im Wesentlichen keilförmige Querschnittsfläche. Vorzugsweise weisen die Dichtelemente der Dichtungseinheit, insbesondere alle Dichtelemente der Dichtungseinheit oder das zumindest eine erste und/oder das zumindest eine zweite Dichtelement, jeweils zur Mittelachse eine im Wesentlichen identische maximale radiale Erstreckung auf. Bevorzugt weisen zumindest das zumindest eine erste Dichtelement, das zumindest eine zweite Dichtelement und ein drittes Dichtelement der Dichtungseinheit jeweils zur Mittelachse eine im Wesentlichen identische maximale radiale Erstreckung auf. Insbesondere weisen die Dichtelemente der Dichtungseinheit jeweils um die Mittelachse eine im Wesentlichen gleichbleibende Querschnittsfläche auf. Bevorzugt weisen die Dichtelemente der Dichtungseinheit jeweils um die Mittelachse eine im Wesentlichen gleichbleibende maximale radiale Erstreckung auf. Bevorzugt weisen das zumindest eine erste Dichtelement und das zumindest eine zweite Dichtelement jeweils parallel zur Mittelachse eine im Wesentlichen identische maximale Höhe auf.

Vorzugsweise sind das zumindest eine erste Dichtelement und das zumindest eine zweite Dichtelement, vorzugsweise alle Dichtelemente der Dichtungseinheit, insbesondere in einem montierten Zustand der Dichtungsvorrichtung, derart ausgebildet und/oder angeordnet, dass das zumindest eine erste Dichtelement und das zumindest eine zweite Dichtelement bzw. die Dichtelemente entlang der Mittelachse betrachtet kongruent zueinander ausgebildet sind. Bevorzugt sind das zumindest eine erste Dichtelement und das zumindest eine zweite Dichtelement, insbesondere in einem montierten Zustand der Dichtungsvorrichtung, derart ausgebildet und/oder angeordnet, dass das zumindest eine erste Dichtelement und das zumindest eine zweite Dichtelement entlang der Mittelachse betrachtet einander vollständig abdeckend hintereinander angeordnet sind.

Vorzugsweise ist die Dichtungsvorrichtung derart ausgebildet, dass die Mittelachse, insbesondere in einem montierten Zustand der Dichtungsvorrichtung, eine Haupterstreckungsachse bzw. eine Mittelachse der Stellstange und/oder einer durch das Gehäuseteil ausgebildete Durchführung zur teilweisen Aufnahme der Stellstange umfasst. Insbesondere ist der Spalt zwischen einer die Durchführung begrenzenden Innenfläche des Gehäuseteils und einer Außenfläche der Stellstange ausgebildet. Vorzugsweise ist die Dichtungsvorrichtung, insbesondere die Dichtungseinheit, dazu vorgesehen bzw. ausgebildet, zumindest größtenteils, insbesondere im Wesentlichen vollständig, innerhalb einer durch das Gehäuseteil ausgebildeten Ausnehmung angeordnet zu werden, wobei insbesondere die Ausnehmung an die Durchführung grenzt.

Das zumindest eine zweite Dichtelement weist vorzugsweise zumindest zwei Anlegeflächen auf. Bevorzugt sind die Anlegeflächen des zumindest einen zweiten Dichtelements jeweils schräg zur Mittelachse ausgebildet. Vorzugsweise sind die Anlegeflächen des zumindest einen zweiten Dichtelements jeweils derart ausgebildet, dass eine Kontur der jeweiligen Anlegefläche in einer die Mittelachse umfassenden Schnittebene im Wesentlichen geradlinig ausgebildet ist. Bevorzugt sind die Anlegeflächen des zumindest einen zweiten Dichtelements jeweils derart ausgebildet, dass die jeweilige Anlegefläche in einer die Mittelachse umfassenden Schnittebene in einem von 90° verschiedenen Winkel zur Mittelachse und zu einer die Mittelachse senkrecht schneidenden fiktiven Ebene angeordnet ist. Vorzugsweise sind die Anlegefläche(n) des zumindest einen ersten Dichtelements und des zumindest einen zweiten Dichtelements formkomplementär zueinander ausgebildet.

Insbesondere weist das zumindest eine erste Dichtelement zumindest zwei Anlegeflächen auf, die jeweils schräg zur Mittelachse ausgebildet sind. Vorzugsweise sind die Anlegeflächen des ersten Dichtelements jeweils derart ausgebildet, dass eine Kontur der jeweiligen Anlegefläche in einer die Mittelachse umfassenden Schnittebene im Wesentlichen geradlinig ausgebildet ist. Bevorzugt sind die Anlegeflächen des zumindest einen ersten Dichtelements jeweils derart ausgebildet, dass die jeweilige Anlegefläche in einer die Mittelachse umfassenden Schnittebene in einem von 90° verschiedenen Winkel zur Mittelachse und zu einer die Mittelachse senkrecht schneidenden fiktiven Ebene angeordnet ist. Bevorzugt erstrecken sich die Anlegeflächen des zumindest einen zweiten Dichtelements jeweils im Wesentlichen vollständig um die Mittelachse herum. Vorzugsweise erstrecken sich die Anlegeflächen des zumindest einen ersten Dichtelements jeweils im Wesentlichen vollständig um die Mittelachse herum.

Es ist denkbar, dass die Dichtungseinheit mehr als ein erstes Dichtelement und/oder mehr als ein zweites Dichtelement umfasst, wobei insbesondere jeweils eines der zweiten Dichtelemente zwischen zwei der ersten Dichtelemente angeordnet ist.

Durch eine erfindungsgemäße Ausgestaltung der Dichtungsvorrichtung kann eine vorteilhaft hohe Dichtigkeit gegenüber flüssigen oder gasförmigen Medien, insbesondere gegenüber Helium, erreicht werden. Es kann eine vorteilhaft hohe Kompaktheit der Dichtungsvorrichtung ermöglicht werden, wodurch insbesondere teure und zeitaufwändige Umgestaltungen bestehender Gehäuseteile des Stellgeräts entfallen können. Durch die Geometrie der Bauteile der Dichtungseinheit kann eine vorteilhaft hohe Dichtigkeit mit dem Kunststoff als Material erreicht werden, insbesondere gegenüber anderen Dichtungsmaterialien, wie beispielsweise Graphit. Es kann eine vorteilhaft hohe Leckage-Klasse für das Stellgerät erreicht werden.

Weiter wird vorgeschlagen, dass die Mehrzahl der Dichtelemente ein drittes Dichtelement umfasst, das zu einem Anlegen an eine Anschlagfläche des Gehäuseteils vorgesehen ist, wobei das dritte Dichtelement entlang der Mittelachse an einem Endbereich der Dichtungseinheit angeordnet ist und über eine schräg zur Mittelachse ausgebildete Auflagefläche des dritten Dichtelements an einem der anderen Dichtelemente der Dichtungseinheit anliegt, wobei vorzugsweise das dritte Dichtelement zumindest größtenteils, insbesondere im Wesentlichen vollständig, aus einem Kunststoff, insbesondere aus dem gleichen Material wie das zumindest eine erste Dichtelement und das zumindest eine zweite Dichtelement, vorzugsweise aus dem Polymer, ausgebildet ist. Es kann eine vorteilhaft hohe Dichtwirkung an der Übergangsstelle zwischen einer die Dichtungsvorrichtung aufnehmenden Ausnehmung des Gehäuseteils und der weiteren Durchführung des Gehäuseteils erreicht werden. Unter bevorzugten Bedingungen im Stellgerätebetrieb kann vorteilhaft ein Abdichten eines mit einem Abstand von der Ausnehmung gebildeten Spalts zwischen Stellstange und Gehäuseteil erreicht werden, insbesondere da das Material des dritten Dichtelements bei den gegebenen Bedingungen verformt werden kann.

Alternativ ist denkbar, dass das dritte Dichtelement aus einem anderen, insbesondere von dem Kunststoff verschiedenen, Material ausgebildet ist, wie beispielsweise einem Metall, insbesondere Titan, oder einer Keramik. Dies kann insbesondere für eine Verwendung der Dichtungsvorrichtung für spezielle Medien, beispielsweise zu einem Schutz vor Korrosion o.dgl., sinnvoll sein. Insbesondere kann mit dem Kunststoff eine höhere Dichtigkeit, insbesondere an einem Spalt zwischen drittem Dichtelement und erstem bzw. zweitem Dichtelement, ermöglicht werden. Vorzugsweise weist das dritte Dichtelement an einer der Anschlagfläche zugewandten Seite eine Abstützfläche auf, die insbesondere im Wesentlichen senkrecht zur Mittelachse ausgebildet ist. Insbesondere ist das dritte Dichtelement, insbesondere die Abstützfläche, derart ausgebildet und/oder angeordnet, dass eine Kontur der Abstützfläche in einer die Mittelachse umfassenden Schnittebene im Wesentlichen senkrecht zur Mittelachse ausgebildet ist. Bevorzugt ist die Abstützfläche im Wesentlichen eben ausgebildet. Vorzugsweise erstreckt sich die Abstützfläche im Wesentlichen vollständig um die Mittelachse herum. Bevorzugt entspricht eine parallel zur Mittelachse ausgebildete maximale Höhe des dritten Dichtelements mindestens einer maximalen Höhe des zumindest einen ersten Dichtelements und/oder des zumindest einen zweiten Dichtelements. Vorzugsweise sind eine parallel zur Mittelachse ausgebildete maximale Höhe des zumindest einen ersten Dichtelements und eine parallel zur Mittelachse ausgebildete maximale Höhe des zumindest einen zweiten Dichtelements im Wesentlichen identisch ausgebildet. Vorzugsweise ist die Auflagefläche des dritten Dichtelements derart ausgebildet, dass eine Kontur der Auflagefläche in einer die Mittelachse umfassenden Schnittebene im Wesentlichen geradlinig ausgebildet ist. Bevorzugt ist die Auflagefläche des dritten Dichtelements derart ausgebildet, dass die Auflagefläche in einer die Mittelachse umfassenden Schnittebene in einem von 90° verschiedenen Winkel zur Mittelachse und zu einer die Mittelachse senkrecht schneidenden fiktiven Ebene angeordnet ist. Bevorzugt ist die Auflagefläche des dritten Dichtelements derart ausgebildet, dass eine, insbesondere im Wesentlichen geradlinige, Kontur der Auflagefläche in einer die Mittelachse umfassenden Schnittebene jeweils zu einer die Mittelachse senkrecht schneidenden fiktiven Ebene in einem Winkel von im Wesentlichen 30° ausgebildet ist. Vorzugsweise ist die Auflagefläche des dritten Dichtelements derart ausgebildet, dass eine, insbesondere im Wesentlichen geradlinige, Kontur der Auflagefläche in einer die Mittelachse umfassenden Schnittebene jeweils zur Mittelachse in einem Winkel von im Wesentlichen 60° ausgebildet ist.

Zudem wird vorgeschlagen, dass die im Wesentlichen keilförmige(n) Querschnittsfläche(n) des zumindest einen ersten Dichtelements und/oder des zumindest einen zweiten Dichtelements jeweils eine Kontur aufweist/aufweisen, die zumindest bereichsweise, insbesondere vollständig, ein gleichschenkliges Dreieck ausbildet. Es kann eine vorteilhaft hohe Abdichtung zwischen jeweils zwei der Dichtelemente der Dichtungsvorrichtung ermöglicht werden. Bevorzugt kann eine modulare Bauweise der Dichtungseinheit mit einer, je nach Anwendung, Einbauraum für die Dichtungsvorrichtung im Stellgerät und/oder Medium wechselnden Anzahl an Dichtelementen ermöglicht werden, da Anlegewinkel zwischen jeweils zwei der Dichtelemente der Dichtungsvorrichtung im Wesentlichen gleich ausgebildet werden können. Zudem kann eine vorteilhaft einfache und fehlerfreie Montage der Dichtungseinheit ermöglicht werden, da eine Ausrichtung und eine Reihenfolge der zu platzierenden Dichtelemente klar ersichtlich gemacht werden kann. Darunter, dass die Kontur "zumindest bereichsweise ein gleichschenkliges Dreieck ausbildet" soll insbesondere verstanden werden, dass die Kontur zumindest drei Seiten aufweist, die in ihrer räumlichen Ausrichtung, insbesondere in einem Winkel zueinander, deckungsgleich zu den Seiten eines gleichschenkliges Dreieck angeordnet sind, wobei insbesondere denkbar ist, dass sich die drei Seiten der Kontur nicht schneiden, wobei beispielsweise fiktive Ecken des gleichschenkliges Dreiecks als stumpfförmige Absätze ausgebildet sein können. Bevorzugt bildet die Kontur, insbesondere die einzelnen Seiten der Kontur jeweils, mindestens 70%, vorzugsweise mindestens 80% und besonders bevorzugt mindestens 90%, der Kontur, insbesondere der einzelnen Seiten, des gleichschenkligen Dreiecks deckungsgleich ab. Bevorzugt sind das zumindest eine erste Dichtelement und das zumindest eine zweite Dichtelement jeweils derart ausgebildet und/oder angeordnet, dass die im Wesentlichen dreieckigen Konturen der Querschnittsflächen des zumindest einen ersten Dichtelements in einer die Mittelachse umfassenden Schnittebene, insbesondere bezüglich einer Anordnung der Winkel des gleichschenkligen Dreiecks, um im Wesentlichen 180° gedreht zu der im Wesentlichen dreieckigen Kontur der Querschnittsfläche des zumindest einen zweiten Dichtelements ausgebildet sind.

Ferner wird vorgeschlagen, dass die im Wesentlichen keilförmigen Querschnittsflächen des zumindest einen ersten Dichtelements und des zumindest einen zweiten Dichtelements jeweils eine Kontur aufweisen, die zumindest im Wesentlichen ein Dreieck ausbildet, wobei das zumindest eine erste Dichtelement und das zumindest eine zweite Dichtelement jeweils derart angeordnet und/oder ausgebildet sind, dass zwei Seiten, insbesondere die zwei Schenkel, des Dreiecks schräg zur Mittelachse ausgerichtet sind und eine dritte Seite, insbesondere die Basis, des Dreiecks im Wesentlichen parallel zur Mittelachse ausgerichtet ist. Es kann eine vorteilhaft hohe Abdichtung zwischen jeweils zwei der Dichtelemente der Dichtungsvorrichtung ermöglicht werden. Bevorzugt kann eine modulare Bauweise der Dichtungseinheit mit einer, je nach Anwendung, Einbauraum für die Dichtungsvorrichtung im Stellgerät und/oder Medium, wechselnden Anzahl an Dichtelementen ermöglicht werden, da die Anlegewinkel zwischen jeweils zwei der Dichtelemente der Dichtungsvorrichtung im Wesentlichen gleich ausgebildet werden können. Zudem kann eine vorteilhaft einfache und fehlerfreie Montage der Dichtungseinheit ermöglicht werden, da eine Ausrichtung und eine Reihenfolge der zu platzierenden Dichtelemente durch die Grundform der Dichtelemente klar ersichtlich gemacht werden kann. Darunter, dass die Kontur jeweils "zumindest im Wesentlichen ein Dreieck ausbildet" soll insbesondere verstanden werden, dass die Kontur zumindest drei Seiten aufweist, die in ihrer räumlichen Ausrichtung, insbesondere in einem Winkel zueinander, deckungsgleich zu den Seiten eines Dreiecks angeordnet sind, wobei insbesondere denkbar ist, dass sich die drei Seiten der Kontur nicht schneiden, wobei beispielsweise fiktive Ecken des Dreiecks als stumpfförmige Absätze ausgebildet sein können.

Des Weiteren wird vorgeschlagen, dass die im Wesentlichen keilförmige(n) Querschnittsfläche(n) des zumindest einen ersten Dichtelements und/oder des zumindest einen zweiten Dichtelements jeweils eine Kontur aufweist/aufweisen, wobei ein aus zwei schräg zur Mittelachse ausgerichteten Seiten der Kontur aufgespannter, insbesondere von zwei Schenkeln eines durch die Kontur gebildeten gleichschenkligen Dreiecks aufgespannter, Winkel einen Wert aus einem Winkelbereich zwischen 50° und 70°, vorzugsweise zwischen 55° und 65° und besonders bevorzugt zwischen 58° und 62°, aufweist, vorzugsweise von im Wesentlichen 60° beträgt. Es kann eine vorteilhaft hohe Dichtigkeit in Kombination mit dem Material der Dichtelemente erreicht werden. Insbesondere mit aus Polymer, besonders bevorzugt aus R-PTFE, M-PTFE oder TFM, ausgebildeten Dichtelementen kann dadurch eine sehr hohe Dichtigkeit besonders gegenüber gasförmigen Medien, insbesondere Helium, erreicht werden. Durch den vorteilhaft exakt gewählten Winkel zwischen den Seiten/Schenkeln der Kontur, insbesondere bei geringen Fertigungstoleranzen, kann ein vorteilhaft formschlüssiges Anliegen von jeweils zwei der Dichtelemente aneinander erreicht werden, was insbesondere eine höhere Dichtigkeit ermöglicht. Unter "im Wesentlichen 60°" soll insbesondere verstanden werden, dass der Winkel innerhalb von üblichen Fertigungstoleranzen bei der Herstellung der Dichtelemente aus dem Kunststoff, insbesondere dem Polymer, bevorzugt aus R-PTFE, M-PTFE oder TFM, 60° beträgt. Durch einen Wert des Winkels von im Wesentlichen 60° kann eine besonders hohe Dichtigkeit der Dichtungsvorrichtung ermöglicht werden, insbesondere speziell für gasförmige Medien, beispielsweise Helium. Bevorzugt beträgt eine maximale Abweichung des Winkels höchstens 17%, vorzugsweise höchstens 10% und besonders bevorzugt höchstens 5%, insbesondere von 60°. Besonders bevorzugt sind die Anlegeflächen des zumindest einen zweiten Dichtelements jeweils derart ausgebildet, dass eine, insbesondere im Wesentlichen geradlinige, Kontur der jeweiligen Anlegefläche in einer die Mittelachse umfassenden Schnittebene jeweils zu einer die Mittelachse senkrecht schneidenden fiktiven Ebene in einem Winkel ausgebildet ist, der einen Wert aus einem Winkelbereich zwischen 25° und 35°, insbesondere zwischen 27,5° und 32,5° und besonders bevorzugt zwischen 29° und 31°, insbesondere von im Wesentlichen 30°, aufweist. Vorzugsweise sind die Anlegeflächen des zumindest einen zweiten Dichtelements jeweils derart ausgebildet, dass eine, insbesondere im Wesentlichen geradlinige, Kontur der jeweiligen Anlegefläche in einer die Mittelachse umfassenden Schnittebene jeweils zur Mittelachse in einem Winkel ausgebildet ist, der einen Wert aus einem Winkelbereich zwischen 55° und 65°, insbesondere zwischen 57,5° und 62,5° und besonders bevorzugt zwischen 59° und 61°, insbesondere von im Wesentlichen 60°, aufweist. Bevorzugt sind die Anlegeflächen des zumindest einen ersten Dichtelements jeweils derart ausgebildet, dass eine, insbesondere im Wesentlichen geradlinige, Kontur der jeweiligen Anlegefläche in einer die Mittelachse umfassenden Schnittebene jeweils zu einer die Mittelachse senkrecht schneidenden fiktiven Ebene in einem Winkel ausgebildet ist, der einen Wert aus einem Winkelbereich zwischen 25° und 35°, insbesondere zwischen 27,5° und 32,5° und besonders bevorzugt zwischen 29° und 31°, insbesondere von im Wesentlichen 30°, aufweist. Vorzugsweise sind die Anlegeflächen des zumindest einen ersten Dichtelements jeweils derart ausgebildet, dass eine, insbesondere im Wesentlichen geradlinige, Kontur der jeweiligen Anlegefläche in einer die Mittelachse umfassenden Schnittebene jeweils zur Mittelachse in einem Winkel ausgebildet ist, der einen Wert aus einem Winkelbereich zwischen 55° und 65°, insbesondere zwischen 57,5° und 62,5° und besonders bevorzugt zwischen 59° und 61°, insbesondere von im Wesentlichen 60°, aufweist. Bevorzugt ist/sind das zumindest eine erste Dichtelement und/oder das zumindest eine zweite Dichtelement jeweils derart ausgebildet, dass die Querschnittsfläche des jeweiligen Dichtelements im Bereich des Winkels, welcher insbesondere im Wesentlichen 60° beträgt, einen Stumpf aufweist, wobei sich insbesondere die zwei den Winkel aufspannenden Seitenflächen nicht in einem Punkt schneiden, sondern vorzugsweise lediglich in einem fiktiven Punkt. Dadurch kann vorzugsweise eine höhere Dichtwirkung mit einer dort anzulegenden Fläche ermöglicht werden. Die Dichtelemente der Dichtungseinheit, insbesondere das zumindest eine erste Dichtelement, das zumindest eine zweite Dichtelement und/oder das zumindest eine dritte Dichtelement, sind insbesondere dazu vorgesehen/derart ausgebildet, zu einer Abdichtung des Spalts mit einer Außenfläche der Stellstange zusammenzuwirken. Bevorzugt ist das zumindest eine erste Dichtelement dazu vorgesehen/derart ausgebildet, zu einer Abdichtung des Spalts über eine im Wesentlichen parallel zur Mittelachse ausgebildete Dichtfläche mit der Stellstange, insbesondere der Außenfläche der Stellstange, zusammenzuwirken. Vorzugsweise ist das zumindest eine zweite Dichtelement dazu vorgesehen/derart ausgebildet, zu einer Abdichtung des Spalts über eine Kante bzw. eine im Wesentlichen parallel zur Mittelachse ausgebildete Stumpffläche, die insbesondere an einer durch die zwei schrägen Anlegeflächen des zumindest einen zweiten Dichtelements gebildeten Innenseite des zumindest einen zweiten Dichtelements ausgebildet ist, mit der Stellstange, insbesondere der Außenfläche der Stellstange, zusammenzuwirken.

Zudem wird vorgeschlagen, dass der Kunststoff, insbesondere das Polymer, als R-PTFE, M-PTFE oder TFM ausgebildet ist. Es kann eine vorteilhaft hohe Dichtigkeit ermöglicht werden, besonders gegenüber gasförmigen Medien, insbesondere Helium. Durch die besonderen Eigenschaften von R-PTFE, M-PTFE und TFM, vorzugsweise die besonders dichte Molekülstruktur, eine höhere Federrate, Kriechfestigkeit, verbesserte Ermüdungseigenschaften und bessere Spannungswiederherstellung im Vergleich zu beispielsweise PTFE, kann vorteilhaft eine Formanpassung der Dichtelemente an die Innengeometrie zwischen Gehäuseteil und Stellstange bei üblichen Betriebsbedingungen des Stellgeräts ermöglicht werden. Dadurch kann eine besonders hohe Dichtigkeit ermöglicht werden, besonders gegenüber gasförmigen Medien, insbesondere Helium.

Ferner wird vorgeschlagen, dass die Dichtungsvorrichtung eine Anpresseinheit umfasst, die dazu ausgebildet ist, die Dichtungseinheit zu einem Abdichten des Spalts mit einer Anpresskraft zu beaufschlagen, wobei die Anpresseinheit zumindest ein Anpresselement umfasst, das eine im Wesentlichen parallel zur Mittelachse gerichtete Anpresskraft auf die Dichtungseinheit, insbesondere auf ein Übertragungselement der Dichtungseinheit, überträgt, wobei die Anpresseinheit, insbesondere das zumindest eine Anpresselement, derart ausgebildet ist, dass die Anpresskraft auf die Dichtungseinheit mindestens 15 N/mm², vorzugsweise mindestens 17 N/mm² und besonders bevorzugt mindestens 19 N/mm², beträgt. Durch die gewählte hohe Anpresskraft kann eine vorteilhaft hohe Dichtigkeit erreicht werden. Vorzugsweise kann durch die Anpresskraft ein vorteilhafter Formschluss zwischen den Dichtelementen gewährleistet werden. Durch die gewählte Anpresskraft kann unter üblichen Betriebsbedingungen des Stellgeräts eine vorteilhafte Verformung des Materials der Dichtelemente erreicht werden, wodurch eine besonders hohe Dichtigkeit erreicht werden kann, besonders gegenüber gasförmigen Medien, insbesondere Helium. Bei einer zu hohen Anpresskraft kann es zu einer Beschädigung der Dichtelemente kommen. Bevorzugt ist die Dichtungsvorrichtung, insbesondere die Dichtungseinheit, zur Verwendung im Stellgerät bei einer Betriebstemperatur von maximal 200°C vorgesehen. Bevorzugt ist die Anpresseinheit, insbesondere das zumindest eine Anpresselement, derart ausgebildet, dass die Anpresskraft auf die Dichtungseinheit höchstens 30 N/mm², vorzugsweise höchstens 27 N/mm² und besonders bevorzugt höchstens 25 N/mm², beträgt. Insbesondere kann es bei einer zu hohen Anpresskraft zu Beschädigungen, beispielsweise einer ungewollt starken Verformung, der Dichtelemente kommen. Vorzugsweise ist die Anpresseinheit, insbesondere das zumindest eine Anpresselement, an einer dem dritten Dichtelement abgewandten Seite der Dichtungseinheit, insbesondere des zumindest einen ersten Dichtelements oder des zumindest einen zweiten Dichtelements, angeordnet. Bevorzugt ist die Anpresseinheit, insbesondere das zumindest eine Anpresselement, derart ausgebildet, dass die Anpresskraft auf die Dichtungseinheit höchstens 35 N/mm², vorzugsweise höchstens 30 N/mm² und besonders bevorzugt höchstens 25 N/mm², beträgt. Insbesondere ist denkbar, dass die Anpresseinheit eine Mehrzahl von Anpresselementen umfasst. Bevorzugt ist die Anpresseinheit und/oder das zumindest eine Übertragungselement, derart ausgebildet, dass die Anpresskraft um die Mittelachse betrachtet gleichmäßig auf die Dichtungseinheit übertragen wird.

Des Weiteren wird vorgeschlagen, dass die Dichtungsvorrichtung eine Anpresseinheit umfasst, die dazu ausgebildet ist, die Dichtungseinheit zu einem Abdichten des Spalts mit einer Anpresskraft zu beaufschlagen, wobei die Anpresseinheit zumindest ein Anpresselement umfasst, das eine im Wesentlichen parallel zur Mittelachse ausgerichtete Anpresskraft auf die Dichtungseinheit, insbesondere auf ein Übertragungselement der Dichtungseinheit, überträgt, wobei das zumindest eine Anpresselement als eine Feder, insbesondere als eine Druckfeder oder als eine Tellerfeder, ausgebildet ist und über eine Seite des Anpresselements an der Dichtungseinheit, insbesondere an einem Übertragungselement der Dichtungseinheit, anliegt. Es kann ein vorteilhaft automatisches Nachstellen der Packung erreicht werden, insbesondere ohne manuelles Nachziehen o.dgl. durch einen Benutzer oder eine weitere Vorrichtung des Stellgeräts. Es kann eine vorteilhaft einfache Montage der Dichtungsvorrichtung mit genau definierter Anpresskraft auf die Dichtungseinheit ermöglicht werden. Insbesondere kann es bei einem manuellen Einstellen einer anderen Anpresseinheit, beispielsweise über Schrauben o.dgl., bei der Montage zu starken Variationen der an der Dichtungseinheit anliegenden Anpresskraft kommen, welche die Dichtelemente beschädigen oder eine nicht ausreichende Dichtigkeit bewirken könnten. Vorzugsweise erstreckt sich das zumindest eine Anpresselement im Wesentlichen vollständig um die Mittelachse. Es ist denkbar, dass die Anpresseinheit genau ein Anpresselement umfasst.

Zudem wird vorgeschlagen, dass die Dichtungseinheit zumindest ein Übertragungselement umfasst, das dazu ausgebildet ist, eine Anpresskraft einer Anpresseinheit des Stellgeräts oder der Dichtungsvorrichtung aufzunehmen und auf die Dichtelemente zu übertragen, wobei das Übertragungselement entlang der Mittelachse an einem Ende der Dichtungseinheit angeordnet ist, wobei das Übertragungselement senkrecht zur Mittelachse betrachtet eine schräg zur Mittelachse ausgerichtete Übertragungsfläche aufweist, die an dem zumindest einen ersten Dichtelement oder dem zumindest einen zweiten Dichtelement anliegt. Es kann eine Anpresskraft mit einem vorteilhaft hohen in Richtung der Stellstange gerichteten Anteil ermöglicht werden. Dadurch kann insbesondere eine vorteilhaft hohe Dichtigkeit erreicht werden. Vorzugsweise ist die Übertragungsfläche des zumindest einen Übertragungselements derart ausgebildet, dass eine Kontur der Übertragungsfläche in einer die Mittelachse umfassenden Schnittebene im Wesentlichen geradlinig ausgebildet ist. Bevorzugt ist die Übertragungsfläche des zumindest einen Übertragungselements derart ausgebildet, dass die Übertragungsfläche in einer die Mittelachse umfassenden Schnittebene in einem von 90° verschiedenen Winkel zur Mittelachse und zu einer die Mittelachse senkrecht schneidenden fiktiven Ebene angeordnet ist. Vorzugsweise ist die Übertragungsfläche formkomplementär zu der/den Anlegefläche(n) des zumindest einen ersten Dichtelements und/oder des zumindest einen zweiten Dichtelements ausgebildet. Bevorzugt ist die Übertragungsfläche des zumindest einen Übertragungselements derart ausgebildet, dass eine, insbesondere im Wesentlichen geradlinige, Kontur der Übertragungsfläche in einer die Mittelachse umfassenden Schnittebene jeweils zu einer die Mittelachse senkrecht schneidenden fiktiven Ebene in einem Winkel ausgebildet ist, der einen Wert aus einem Winkelbereich zwischen 25° und 35°, insbesondere zwischen 27,5° und 32,5° und besonders bevorzugt zwischen 29° und 31°, insbesondere von im Wesentlichen 30°, aufweist. Vorzugsweise ist die Übertragungsfläche des Übertragungselements derart ausgebildet, dass eine, insbesondere im Wesentlichen geradlinige, Kontur der Übertragungsfläche in einer die Mittelachse umfassenden Schnittebene zur Mittelachse in einem Winkel ausgebildet ist, der einen Wert aus einem Winkelbereich zwischen 55° und 65°, insbesondere zwischen 57,5° und 62,5° und besonders bevorzugt zwischen 59° und 61°, insbesondere von im Wesentlichen 60°, aufweist. Insbesondere sind das Übertragungselement und das dritte Dichtelement an zwei, insbesondere entlang der Mittelachse, entgegengesetzt zueinander ausgebildeten Enden der Dichtungseinheit angeordnet. Vorzugsweise weisen die Dichtelemente der Dichtungseinheit, insbesondere das zumindest eine erste Dichtelement, das zumindest eine zweite Dichtelement und/oder das dritte Dichtelement, jeweils eine maximale radiale Erstreckung relativ zur Mittelachse auf, die vorzugsweise größer ist als eine maximale radiale Erstreckung des Übertragungselements relativ zur Mittelachse. Bevorzugt entspricht ein maximaler Durchmesser der einzelnen Dichtelemente der Dichtungseinheit, insbesondere des zumindest einen ersten Dichtelements, des zumindest einen zweiten Dichtelements und/oder des dritten Dichtelements, einem maximalen Durchmesser des Übertragungselements. Insbesondere weist das Übertragungselement eine lichte Weite auf, die größer ist als eine lichte Weite der einzelnen Dichtelemente der Dichtungseinheit, insbesondere des zumindest einen ersten Dichtelements, des zumindest einen zweiten Dichtelements und/oder des dritten Dichtelements.

Ferner wird vorgeschlagen, dass die Dichtungseinheit zumindest ein Übertragungselement umfasst, das dazu ausgebildet ist, eine Anpresskraft einer Anpresseinheit des Stellgeräts oder der Dichtungsvorrichtung aufzunehmen und auf die Dichtelemente zu übertragen, wobei das Übertragungselement entlang der Mittelachse an einem Ende der Dichtungseinheit angeordnet ist, wobei das Übertragungselement aus einem Metall, insbesondere aus Edelstahl, ausgebildet ist. Es kann eine vorteilhaft hohe Kompaktheit der Dichtungsvorrichtung ermöglicht werden, da durch das verwendete Material ein vorteilhaft robustes Übertragungselement erreicht werden kann, welches die hohe Anpresskraft unbeschadet übertragen kann. Es kann ein vorteilhaft hohes Kraft-pro-Fläche-Verhältnis von der Anpresseinheit auf die Dichtungseinheit realisiert werden, insbesondere ohne Teile der Dichtungseinheit zu beschädigen oder eine ebene Anpressfläche zu verformen. Es kann eine vorteilhaft gleichmäßige Kraftübertragung auf die Dichtelemente ermöglicht werden. Vorzugsweise weist das Übertragungselement parallel zur Mittelachse eine maximale Höhe auf, die kleiner ist als eine maximale Höhe der einzelnen Dichtelemente der Dichtungseinheit, insbesondere des zumindest einen ersten Dichtelements, des zumindest einen zweiten Dichtelements und/oder des dritten Dichtelements. Bevorzugt beträgt die maximale Höhe des Übertragungselements, insbesondere parallel zur Mittelachse, mindestens 2,5 mm, vorzugsweise mindestens 3 mm und besonders bevorzugt mindestens 3,5 mm.

Des Weiteren wird vorgeschlagen, dass die Dichtelemente der Dichtungseinheit, insbesondere zumindest das zumindest eine erste Dichtelement und das zumindest eine zweite Dichtelement und insbesondere zusätzlich das dritte Dichtelement, zusammen parallel zur Mittelachse eine maximale Höhe von mindestens 15 mm, vorzugsweise mindestens 16 mm und besonders bevorzugt mindestens 20 mm, aufweisen. Es kann eine vorteilhaft hohe Dichtigkeit erreicht werden, insbesondere ohne zusätzliche Dichtelemente. Besonders für gasförmige Medien kann dadurch eine vorteilhaft hohe Leckage-Klasse des Stellgeräts ermöglicht werden. Insbesondere ist die maximale Höhe der Dichtungseinheit abhängig von einer Nennweite der zu verwendenden Stellstange, wobei jedoch jeweils eine bestimmte Mindesthöhe für eine ausreichende Abdichtung benötigt wird. Bevorzugt weist/weisen das zumindest eine erste Dichtelement und/oder das zumindest eine zweite Dichtelement jeweils eine maximale Höhe auf, wobei ein Verhältnis der maximalen Höhe der Dichtelemente der Dichtungseinheit, insbesondere zumindest des zumindest einen ersten Dichtelements und des zumindest einen zweiten Dichtelements und insbesondere zusätzlich des dritten Dichtelements, zusammen und der maximalen Höhe des zumindest einen ersten Dichtelements und/oder des zumindest einen zweite Dichtelements mindestens 2, vorzugsweise mindestens 2,4 und besonders bevorzugt mindestens 2,6, beträgt. Vorzugsweise weist die Dichtungseinheit, insbesondere senkrecht zur Mittelachse, einen minimalen Innendurchmesser auf, der insbesondere im Wesentlichen einem Durchmesser der Stellstange entspricht. Bevorzugt entspricht die maximale Höhe der Dichtelemente der Dichtungseinheit, insbesondere zumindest des zumindest einen ersten Dichtelements und des zumindest einen zweiten Dichtelements und insbesondere zusätzlich des dritten Dichtelements, zusammen mindestens 50 % des minimalen Innendurchmessers der Dichtungseinheit. In einer bevorzugten Ausgestaltung der Dichtungsvorrichtung umfasst die Dichtungseinheit zumindest zwei erste Dichtelemente und zumindest ein zweites Dichtelement. In einer weiteren bevorzugten Ausgestaltung der Dichtungsvorrichtung umfasst die Dichtungseinheit höchstens drei erste Dichtelemente und höchstens zwei zweite Dichtelemente. Es sind aber auch mehr als zwei bzw. drei Dichtelemente denkbar. Bevorzugt umfasst die Dichtungseinheit eine ungerade Anzahl an ersten und zweiten Dichtelementen. Insbesondere beträgt eine Anzahl an ersten Dichtelementen der Dichtungseinheit eins mehr oder eins weniger als die Anzahl an zweiten Dichtelementen. Vorzugsweise sind die ersten Dichtelemente der Dichtungseinheit jeweils im Wesentlichen identisch ausgebildet. Vorzugsweise sind die zweiten Dichtelemente der Dichtungseinheit jeweils im Wesentlichen identisch ausgebildet. Insbesondere umfasst die Dichtungseinheit genau ein drittes Dichtelement und/oder genau ein Übertragungselement. Alternativ ist denkbar, dass die Dichtungseinheit eine Mehrzahl von Übertragungselementen umfasst, wobei insbesondere die Übertragungselemente entlang der Mittelachse betrachtet, bevorzugt gleichmäßig, um die Mittelachse verteilt angeordnet sind und vorzugsweise jeweils an einem Dichtelement der Dichtungseinheit anliegen. Das dritte Dichtelement und das Übertragungselement erstrecken sich vorzugsweise jeweils im Wesentlichen vollständig um die Mittelachse.

Außerdem wird ein Stellgerät, insbesondere Dreh- oder Hubventil, vorzugsweise für eine prozesstechnische Anlage, mit einer Stellstange, insbesondere einer Hubstange oder einer Welle, zu einem Bewegen eines Stellglieds über einen mit der Stellstange wirkverbundenen Antrieb, mit zumindest einem Gehäuseteil, das eine Durchführung für eine Aufnahme der Stellstange begrenzt, und mit einer Dichtungsvorrichtung nach einem der vorhergehenden Ansprüche vorgeschlagen, wobei die Dichtungseinheit der Dichtungsvorrichtung dazu vorgesehen ist, im Wesentlichen vollständig zwischen dem Gehäuseteil und der Stellstange angeordnet zu werden.

Durch eine erfindungsgemäße Ausgestaltung des Stellgeräts kann eine vorteilhaft hohe Abdichtung einer Medienkammer des Stellgeräts nach außen, insbesondere zwischen Gehäuseteil und Stellstange, ermöglicht werden. Es kann eine vorteilhaft hohe Dichtigkeit gegenüber flüssigen oder gasförmigen Medien, insbesondere gegenüber Helium, erreicht werden. Es kann eine vorteilhaft hohe Kompaktheit der Dichtungsvorrichtung ermöglicht werden, wodurch insbesondere teure und zeitaufwändige Umgestaltungen bestehender Gehäuseteile des Stellgeräts entfallen können und/oder ein kompaktes Gehäuseteil, insbesondere Deckel, des Stellgeräts ermöglicht werden kann. Es kann eine vorteilhaft hohe Leckage-Klasse für das Stellgerät erreicht werden.

Das Stellgerät, insbesondere die Dichtungsvorrichtung, ist vorzugsweise zu einer Verwendung mit flüssigen oder gasförmigen Medien vorgesehen. Insbesondere ist die Dichtungsvorrichtung dazu ausgebildet, eine Leckage von flüssigen oder gasförmigen Medien durch den zwischen Gehäuseteil und Stellstange ausgebildeten Spalt im Wesentlichen zu verhindern. Insbesondere sind zur Leckage-Abdichtung je nach vorgesehener Anwendungsart, vorgesehenem Medium und/oder vorgesehenem Anwendungsort des Stellgeräts durch die Dichtungsvorrichtung bestimmte Leckage-Klassen zu erreichen. Vorzugsweise ist das Stellgerät, insbesondere die Dichtungsvorrichtung, zu einer Verwendung mit Helium vorgesehen bzw. geeignet, wobei insbesondere durch die erfindungsgemäße Ausgestaltung der Dichtungsvorrichtung auch vorteilhaft geringe Leckageraten erreicht werden können.

Vorzugsweise ist die Stellstange dazu vorgesehen, bei einer Stellbewegung des Stellgeräts, insbesondere des Stellglieds des Stellgeräts, innerhalb der Durchführung bewegt zu werden. Es ist denkbar, dass das Stellgerät als ein Hub- oder als ein Drehventil ausgebildet ist, wobei insbesondere die Stellstange dazu vorgesehen ist, innerhalb der Durchführung parallel zur Mittelachse oder um die Mittelachse bewegt zu werden. Besonders bevorzugt ist die Dichtungsvorrichtung zu einer Verwendung in einem Drehventil vorgesehen. Das Gehäuseteil ist vorzugsweise als ein Deckel oder ein Gehäuseaufsatz für ein Gehäuse des Stellgeräts ausgebildet. Die Stellstange ist vorzugsweise als eine Hubstange oder als eine Welle ausgebildet. Vorzugsweise weist die Stellstange, insbesondere in einem mit der Dichtungseinheit zusammenzuwirkenden Bereich, einen Durchmesser auf, der gleich oder größer ist als eine lichte Weite der Dichtelemente der Dichtungseinheit. Insbesondere ist die Dichtungsvorrichtung zu einer Verwendung mit der Stellstange vorgesehen, die, insbesondere in einem für die Dichtungsvorrichtung vorgesehenen Bereich, einen Durchmesser von mehr als 10 mm aufweist.

Zudem wird vorgeschlagen, dass das Gehäuseteil eine Zugangsseite aufweist, von der aus die Dichtungsvorrichtung zumindest teilweise einsetzbar ist, wobei das Gehäuseteil eine zur Zugangsseite geöffnete Ausnehmung an der Durchführung ausbildet, wobei die Dichtungseinheit zumindest größtenteils innerhalb der Ausnehmung angeordnet ist, wobei die Anpresseinheit, insbesondere ein Anpresselement der Anpresseinheit, der Dichtungsvorrichtung an einer der Zugangsseite zugewandten Seite der Dichtungseinheit an der Dichtungseinheit, insbesondere an einem Übertragungselement der Dichtungseinheit, angeordnet ist. Es kann eine vorteilhaft einfache und schnelle Montage ermöglicht werden. Durch eine Anordnung der Anpresseinheit auf einer von einem medienführenden Bereich des Stellgeräts abgewandten Seite des Gehäuseteils kann eine vorteilhaft lange Lebensdauer ermöglicht werden, insbesondere da eine Reaktion mit möglicherweise korrosiven und/oder abrasiven Medium vorteilhaft verhindert werden kann. Vorzugsweise ist die Zugangsseite als eine dem Gehäuse, insbesondere einem Grundkörper des Gehäuses, des Stellgeräts abgewandte Oberseite des Gehäuseteils ausgebildet. Vorzugsweise erstreckt sich die Ausnehmung entlang der Mittelachse betrachtet vollständig um die Mittelachse. Bevorzugt weist die Ausnehmung eine größere maximale radiale Erstreckung relativ zur Mittelachse auf als die Durchführung. Vorzugsweise grenzt die Durchführung an die Ausnehmung an. Bevorzugt ist die Durchführung im Wesentlichen zylindrisch ausgebildet. Bevorzugt ist die Ausnehmung im Wesentlichen zylindrisch ausgebildet. Insbesondere ist ein durch das Gehäuseteil begrenzter Raum im Bereich der Ausnehmung, insbesondere im Vergleich zu einem von der Ausnehmung beabstandet ausgebildeten Bereich der Durchführung, von der Mittelachse aus radial nach außen aufgeweitet ausgebildet. Besonders bevorzugt ist die Dichtungseinheit, insbesondere die Dichtelemente der Dichtungseinheit oder das zumindest eine erste Dichtelement, das zumindest eine zweite Dichtelement, das dritte Dichtelement und/oder das Übertragungselement, vollständig innerhalb der Ausnehmung angeordnet. Insbesondere ist die Dichtungseinheit senkrecht zur Mittelachse betrachtet vollständig unterhalb einer an die Durchführung und/oder die Ausnehmung grenzenden Außenfläche des Gehäuseteils angeordnet. Bevorzugt ist die Anpresseinheit, insbesondere das zumindest eine Anpresselement, senkrecht zur Mittelachse betrachtet vollständig unterhalb der an die Durchführung und/oder die Ausnehmung grenzenden Außenfläche des Gehäuseteils angeordnet. Vorzugsweise umfasst das Stellgerät zumindest ein Abdeckelement, welches dazu ausgebildet ist, die Dichtungsvorrichtung, insbesondere die Dichtungseinheit und/oder die Anpresseinheit, entlang der Mittelachse betrachtet im Wesentlichen vollständig abzudecken. Dadurch kann insbesondere eine ungewollte Beschädigung der Dichtungsvorrichtung und/oder Beeinträchtigung einer Funktion der Dichtungsvorrichtung, insbesondere durch Verschmutzungen, Ablagerungen, Medienrückstände o.dgl., vorteilhaft verhindert werden.

Die erfindungsgemäße Dichtungsvorrichtung und/oder das erfindungsgemäße Stellgerät sollen/soll hierbei nicht auf die oben beschriebene Anwendung und Ausführungsform beschränkt sein. Insbesondere können/kann die erfindungsgemäße Dichtungsvorrichtung und/oder das erfindungsgemäße Stellgerät zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1.:: eine schematische Schnittansicht eines erfindungsgemäßen Stellgeräts mit einer erfindungsgemäßen Dichtungsvorrichtung,
- Figur 2.:: eine schematische Schnittansicht der erfindungsgemäßen Dichtungsvorrichtung im Detail,
- Figur 3.:: eine schematische Draufsicht der erfindungsgemäßen Dichtungsvorrichtung entlang einer Mittelachse der Dichtungsvorrichtung,
- Figur 4.:: eine schematische Schnittansicht einer alternativen Ausgestaltung einer erfindungsgemäßen Dichtungsvorrichtung eines erfindungsgemäßen Stellgeräts mit einer Dichtungseinheit und einer Anpresseinheit der Dichtungsvorrichtung und
- Figur 5.:: eine schematische Schnittansicht einer weiteren alternativen Ausgestaltung einer erfindungsgemäßen Dichtungsvorrichtung eines erfindungsgemäßen Stellgeräts mit einer Dichtungseinheit und einer Anpresseinheit der Dichtungsvorrichtung.

### Beschreibung der Ausführungsbeispiele

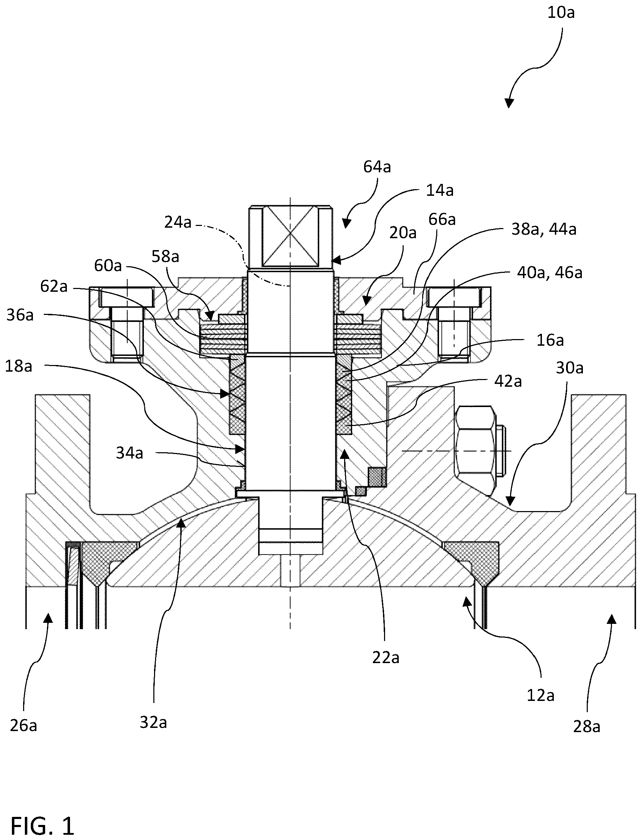

In Figur 1 ist eine schematische Schnittansicht eines Stellgeräts 10a gezeigt. Das Stellgerät 10a ist als ein Drehventil, insbesondere ein Kugelhahnventil, ausgebildet. Es sind aber auch andere Ausgestaltungen des Stellgeräts 10a denkbar. Das Stellgerät 10a umfasst ein Stellglied 12a und eine mit dem Stellglied 12a verbundene Stellstange 14a. Insbesondere ist das Stellglied 12a als ein Kugelhahn ausgebildet. Die Stellstange 14a ist zu einem Bewegen des Stellglieds 12a über einen mit der Stellstange 14a wirkverbundenen Antrieb vorgesehen, wobei insbesondere der Antrieb in den Figuren nicht gezeigt ist. Insbesondere ist die Stellstange 14a als eine Welle ausgebildet und bei einem Betrieb des Stellgeräts 10a zu einer Rotation um eine Haupterstreckungsachse der Stellstange 14a vorgesehen. Das Stellgerät 10a umfasst ein Gehäuseteil 16a, welches eine Durchführung 18a zur teilweisen Aufnahme der Stellstange 14a ausbildet. Das Stellgerät 10a umfasst eine Dichtungsvorrichtung 20a mit einer Dichtungseinheit 22a, die dazu vorgesehen ist, im Wesentlichen vollständig zwischen dem Gehäuseteil 16a und der Stellstange 14a angeordnet zu werden. Durch das Gehäuseteil 16a und die Stellstange 14a ist im Bereich der Durchführung 18a ein Spalt gebildet. Die Dichtungseinheit 22a ist zu einem Abdichten des durch das Gehäuseteil 16a und die Stellstange 14a ausgebildeten Spalts gegenüber gasförmigen oder flüssigen Medien, insbesondere Helium, vorgesehen. Die Dichtungsvorrichtung 20a umfasst eine Mittelachse 24a, die insbesondere im Wesentlichen der Haupterstreckungsachse der Stellstange 14a entspricht bzw. diese umfasst und/oder zumindest parallel dazu ausgebildet ist.

Das Stellgerät 10a umfasst einen Einlasskanal 26a und einen Auslasskanal 28a, wobei das Stellglied 12a zwischen dem Einlasskanal 26a und dem Auslasskanal 28a angeordnet ist. Das Stellgerät 10a umfasst ein Gehäuse 30a, wobei das Stellglied 12a zusammen mit der Stellstange 14a in dem Gehäuse 30a beweglich, insbesondere drehbar, gelagert ist. Insbesondere ist hier das Gehäuseteil 16a als Teil des Gehäuses 30a ausgebildet. Alternativ ist denkbar, dass das Gehäuseteil 16a als Deckel oder Aufsatz eines Grundkörpers des Gehäuses 30a ausgebildet ist. Das Gehäuse 30a bildet eine Kammer 32a aus, in der das Stellglied 12a angeordnet ist. Die Stellstange 14a ragt durch die Durchführung 18a in die Kammer 32a hinein. Während einem Betrieb des Stellgeräts 10a strömt ein Medium, insbesondere ein flüssiges oder gasförmiges Medium, durch die Kammer 32a. Dadurch ist es möglich, insbesondere bei höheren Drücken des Mediums, dass Medium zwischen dem Gehäuseteil 16a und der Stellstange 14a durch die Durchführung 18a bzw. den Spalt darin strömt. Die Dichtungsvorrichtung 20a ist dazu vorgesehen, ein Austreten von Medium aus dem Gehäuse 30a des Stellgeräts 10a durch den zwischen Gehäuseteil 16a und Stellstange 14a gebildeten Spalt im Wesentlichen zu verhindern. Eine solche Strömung des Mediums würde insbesondere im Wesentlichen parallel zur Mittelachse 24a bzw. entlang einer Erstreckung der Durchführung 18a verlaufen. Das Stellgerät 10a, insbesondere die Dichtungsvorrichtung 20a, ist zu einer Verwendung mit flüssigen und/oder gasförmigen Medien vorgesehen. Insbesondere sind zur Leckageabdichtung je nach vorgesehener Anwendungsart, vorgesehenem Medium und/oder vorgesehenem Anwendungsort des Stellgeräts 10a durch die Dichtungsvorrichtung 20a bestimmte Leckage-Klassen zu erreichen. Vorzugsweise ist das Stellgerät 10a, insbesondere die Dichtungsvorrichtung 20a, zu einer Verwendung mit Helium vorgesehen bzw. geeignet, wobei insbesondere durch die Dichtigkeit der Dichtungsvorrichtung 20a relativ geringe Leckageraten erreicht werden können. Der Spalt ist zwischen einer die Durchführung 18a begrenzenden Innenfläche des Gehäuseteils 16a und einer Außenfläche 34a der Stellstange 14a ausgebildet. Die Dichtungsvorrichtung 20a, insbesondere die Dichtungseinheit 22a, ist dazu vorgesehen bzw. ausgebildet, zumindest größtenteils, insbesondere im Wesentlichen vollständig, innerhalb einer durch das Gehäuseteil 16a ausgebildeten Ausnehmung 36a angeordnet zu werden, wobei insbesondere die Ausnehmung 36a an die Durchführung 18a grenzt.

Die Dichtungseinheit 22a umfasst eine Mehrzahl von jeweils im Wesentlichen ringförmig ausgebildeten Dichtelementen 38a, 40a, 42a. Die Dichtelemente 38a, 40a, 42a der Dichtungseinheit 22a sind entlang der Mittelachse 24a hintereinander und jeweils um die Mittelachse 24a angeordnet. Die Mehrzahl der Dichtelemente 38a, 40a, 42a umfasst zumindest ein erstes Dichtelement 38a, hier insbesondere drei erste Dichtelemente 38a, und zumindest ein zweites Dichtelement 40a, hier insbesondere zwei zweite Dichtelemente 40a. Die ersten Dichtelemente 38a und die zweiten Dichtelemente 40a weisen jeweils senkrecht zur Mittelachse 24a betrachtet eine im Wesentlichen keilförmige Querschnittsfläche 44a, 46a auf. Die zwei zweiten Dichtelemente 40a sind jeweils entlang der Mittelachse 24a zwischen zwei der ersten Dichtelemente 38a angeordnet. Die zweiten Dichtelemente 40a liegen jeweils über eine schräg zur Mittelachse 24a ausgebildete Anlegefläche 48a des jeweiligen zweiten Dichtelements 40a an zwei der ersten Dichtelemente 38a, insbesondere Anlegeflächen 50a von zwei der ersten Dichtelementen 38a, an.

Die Mehrzahl der Dichtelemente 38a, 40a, 42a sind jeweils im Wesentlichen vollständig aus einem Kunststoff, vorzugsweise einem Polymer, ausgebildet. Der Kunststoff, insbesondere das Polymer, ist als R-PTFE, M-PTFE oder TFM ausgebildet. Alternativ sind auch andere Kunststoffe, insbesondere Polymere, für die Dichtelemente 38a, 40a, 42a, insbesondere auch eine Teilmenge der Dichtelemente 38a, 40a, 42a, denkbar.

Die Mehrzahl der Dichtelemente 38a, 40a, 42a umfasst ein drittes Dichtelement 42a, das zu einem Anlegen an eine Anschlagfläche 54a des Gehäuseteils 16a vorgesehen ist, wobei das dritte Dichtelement 42a entlang der Mittelachse 24a an einem Endbereich der Dichtungseinheit 22a angeordnet ist und über eine schräg zur Mittelachse 24a ausgebildete Auflagefläche 56a des dritten Dichtelements 42a an einem der ersten Dichtelemente 38a anliegt. Das dritte Dichtelement 42a ist im Wesentlichen vollständig aus einem Kunststoff, insbesondere aus dem gleichen Material wie die ersten Dichtelemente und die zweiten Dichtelemente, insbesondere aus R-PTFE, M-PTFE oder TFM, ausgebildet. Die Dichtungsvorrichtung 20a, insbesondere die Dichtungseinheit 22a, ist vorzugsweise zu einer Verwendung im Stellgerät 10a bei einer Betriebstemperatur von maximal 200°C vorgesehen.

Die Dichtungsvorrichtung 20a umfasst eine Anpresseinheit 58a, die dazu ausgebildet ist, die Dichtungseinheit 22a zu einem Abdichten des Spalts mit einer Anpresskraft zu beaufschlagen.

Die Anpresseinheit 58a umfasst eine Mehrzahl von übereinander angeordneten Anpresselementen 60a, die jeweils parallel zur Mittelachse 24a wirken. Die Anpresselemente 60a erstrecken sich jeweils im Wesentlichen vollständig um die Mittelachse 24a. Die Anpresselemente 60a sind dazu vorgesehen bzw. derart ausgebildet und/oder angeordnet, dass sie eine im Wesentlichen parallel zur Mittelachse 24a gerichtete Anpresskraft auf die Dichtungseinheit 22a, insbesondere auf ein Übertragungselement 62a der Dichtungseinheit 22a, übertragen. Die Anpresseinheit 58a, insbesondere die Anpresselemente 60a, ist/sind derart ausgebildet, dass die Anpresskraft auf die Dichtungseinheit 22a mindestens 15 N/mm², vorzugsweise mindestens 17 N/mm² und besonders bevorzugt mindestens 19 N/mm², beträgt.

Die Anpresseinheit 58a, insbesondere die Anpresselemente 60a, ist/sind derart ausgebildet, dass die Anpresskraft auf die Dichtungseinheit höchstens 30 N/mm², vorzugsweise höchstens 27 N/mm² und besonders bevorzugt höchstens 25 N/mm², beträgt. Die Anpresseinheit 58a, insbesondere die Anpresselemente 60a, ist/sind an einer dem dritten Dichtelement 42a abgewandten Seite der Dichtungseinheit 22a, insbesondere der ersten Dichtelemente 38a und/oder der zweiten Dichtelemente 40a, angeordnet. Die Anpresseinheit 58a, insbesondere die Anpresselemente 60a, ist/sind derart ausgebildet, dass die Anpresskraft auf die Dichtungseinheit 22a höchstens 35 N/mm², vorzugsweise höchstens 30 N/mm² und besonders bevorzugt höchstens 25 N/mm², beträgt. Die Anpresseinheit 58a, insbesondere die Anpresselemente 60a, und das Übertragungselement 62a sind derart ausgebildet, dass die Anpresskraft um die Mittelachse 24a betrachtet im Wesentlichen gleichmäßig auf die Dichtungseinheit 22a, insbesondere das Übertragungselement 62a übertragen wird. Die Anpresselemente 60a sind jeweils als eine Feder, insbesondere als eine Tellerfeder, ausgebildet, wobei eines der Anpresselemente 60a über eine Seite des Anpresselements 60a an der Dichtungseinheit 22a, insbesondere an dem Übertragungselement 62a der Dichtungseinheit 22a, anliegt. Insbesondere sind die Anpresselemente 60a entlang der Mittelachse 24a hintereinander angeordnet. Alternativ ist denkbar, dass die/ein Anpresselement€ 60a anders ausgebildet ist/sind, beispielsweise als Druckfeder oder als ein von einer Feder verschieden ausgebildetes Bauteil zu einem Ausüben der Anpresskraft. Alternativ ist denkbar, dass die Anpresseinheit 58a lediglich ein Anpresselement 60a oder eine Mehrzahl von um die Mittelachse 24a verteilt angeordneten Anpresselementen 60a umfasst.

Das Gehäuseteil 16a weist eine Zugangsseite 64a auf, von der aus die Dichtungsvorrichtung 20a zumindest teilweise, hier insbesondere vollständig, in das Gehäuseteil 16a, insbesondere die Ausnehmung 36a, einsetzbar ist. Das Gehäuseteil 16a bildet die zur Zugangsseite 64a geöffnete Ausnehmung 36a an der Durchführung 18a aus, wobei die Dichtungseinheit 22a zumindest größtenteils innerhalb der Ausnehmung 36a angeordnet ist. Die Anpresseinheit 58a, insbesondere die Anpresselemente 60a der Anpresseinheit 58a, ist/sind an einer der Zugangsseite 64a zugewandten Seite der Dichtungseinheit 22a an der Dichtungseinheit 22a, insbesondere an dem Übertragungselement 62a der Dichtungseinheit 22a, angeordnet.

Die Zugangsseite 64a ist als eine dem Gehäuse 30a des Stellgeräts 10a abgewandte Oberseite des Gehäuseteils 16a ausgebildet. Die Ausnehmung 36a erstreckt sich entlang der Mittelachse 24a betrachtet vollständig um die Mittelachse 24a. Die Ausnehmung 36a weist eine größere maximale radiale Erstreckung relativ zur Mittelachse 24a auf als die Durchführung 18a. Die Durchführung 18a grenzt an die Ausnehmung 36a an. Die Durchführung 18a ist im Wesentlichen zylindrisch ausgebildet. Die Ausnehmung 36a ist im Wesentlichen zylindrisch bzw. hohlzylindrisch um die Durchführung 18a, ausgebildet. Ein durch das Gehäuseteil 16a begrenzter Raum im Bereich der Ausnehmung 36a ist, insbesondere im Vergleich zu einem von der Ausnehmung 36a beabstandet ausgebildeten Bereich der Durchführung 18a, von der Mittelachse 24a aus radial nach außen aufgeweitet ausgebildet. Die Dichtungseinheit 22a, insbesondere die Dichtelemente 38a, 40a, 42a der Dichtungseinheit 22a oder die ersten Dichtelemente 38a, die zweiten Dichtelemente 40a, das dritte Dichtelement 42a und/oder das Übertragungselement 62a, ist/sind vollständig innerhalb der Ausnehmung 36a angeordnet. Die Dichtungseinheit 22a ist senkrecht zur Mittelachse 24a betrachtet vollständig unterhalb einer an die Durchführung 18a und/oder die Ausnehmung 36a grenzenden Außenfläche des Gehäuseteils 16a angeordnet. Die Anpresseinheit 58a, insbesondere die Anpresselemente 60a, ist/sind senkrecht zur Mittelachse 24a betrachtet vollständig unterhalb der an die Durchführung 18a und/oder die Ausnehmung 36a grenzenden Außenfläche des Gehäuseteils 16a angeordnet. Das Stellgerät 10a umfasst ein Abdeckelement 66a, welches dazu ausgebildet ist, die Dichtungsvorrichtung 20a, insbesondere die Dichtungseinheit 22a und die Anpresseinheit 58a, entlang der Mittelachse 24a betrachtet im Wesentlichen vollständig abzudecken. Insbesondere liegt das Abdeckelement 66a, vorzugsweise in einem montierten Zustand, an der an die Durchführung 18a und/oder die Ausnehmung 36a grenzenden Außenfläche des Gehäuseteils 16a an.

Das Gehäuseteil 16a ist derart ausgebildet, dass die Ausnehmung 36a in einem der Zugangsseite 64a zugewandten Bereich breiter ausgebildet ist. Insbesondere ist die Anpresseinheit 58a in dem der Zugangsseite 64a zugewandten Bereich der Ausnehmung 36a angeordnet. Die Dichtungseinheit 22a ist in einem der Zugangsseite 64a abgewandten, insbesondere schmaleren, Bereich der Ausnehmung 36a angeordnet. Die Ausnehmung 36a und/oder die Dichtungsvorrichtung 20a, insbesondere die Dichtungseinheit 22a und/oder die Anpresseinheit 58a, innerhalb der Ausnehmung 36a ist/sind durch das Abdeckelement 66a, das Gehäuseteil 16a und die Stellstange 14a im Wesentlichen vollständig umschlossen.

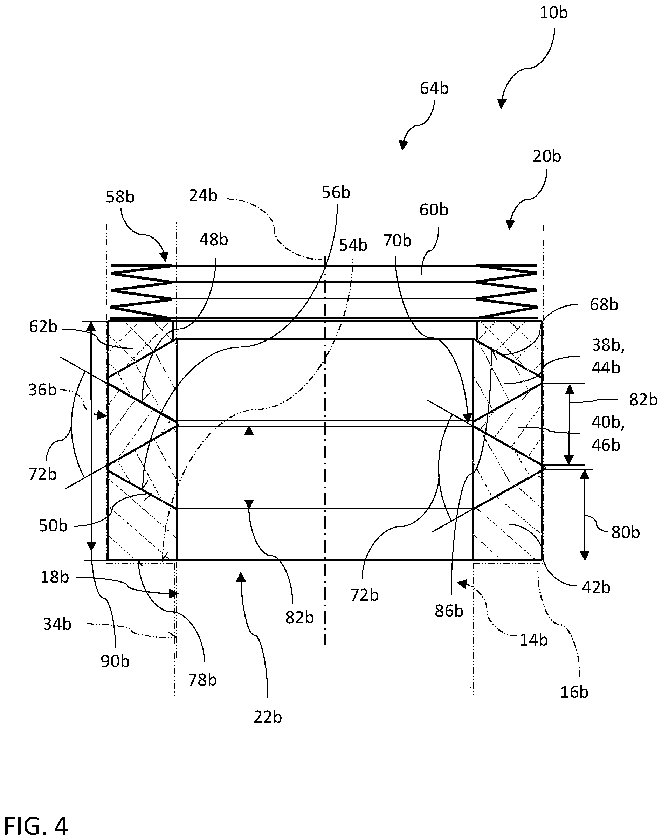

Es ist denkbar, dass die Dichtungseinheit 22a mehr als drei erste Dichtelemente 38a und mehr als zwei zweite Dichtelemente 40a umfasst, wobei insbesondere jeweils eines der zweiten Dichtelemente 40a zwischen zwei der ersten Dichtelemente 38a angeordnet ist. Alternativ ist denkbar, dass die Dichtungseinheit 22a lediglich zwei erste Dichtelemente 38a und lediglich ein zweites Dichtelement 40a (siehe Figur 4) oder beispielsweise zwei erste und zwei zweite Dichtelemente 38a, 40a umfasst.

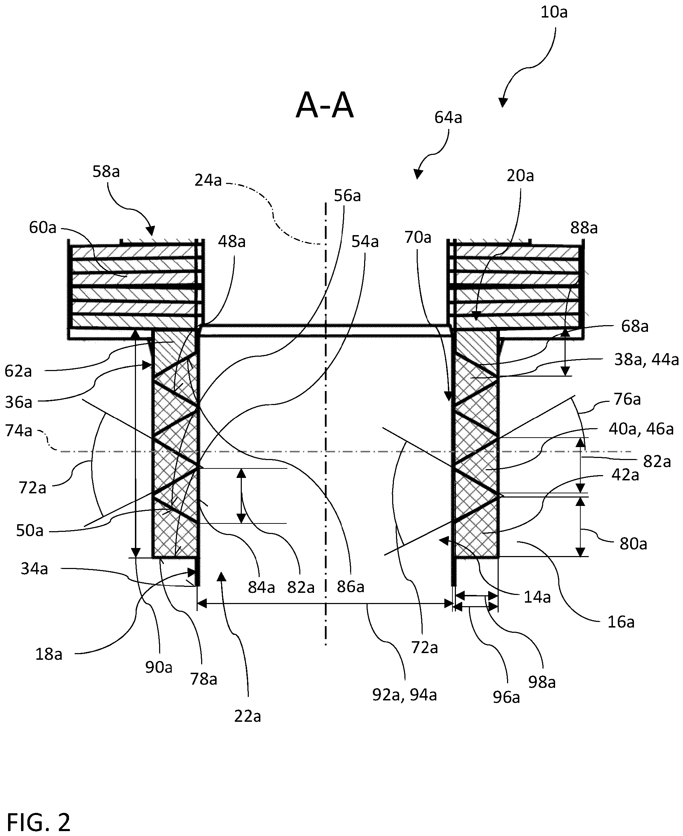

Figur 2 zeigt eine Detailansicht der in Figur 1 gezeigten Dichtungsvorrichtung 20a. Die im Wesentlichen keilförmigen Querschnittsflächen 44a, 46a der ersten Dichtelemente 38a und der zweiten Dichtelemente 40a weisen jeweils eine Kontur 68a auf, die zumindest bereichsweise, insbesondere vollständig, ein gleichschenkliges Dreieck ausbildet. Die Querschnittsflächen 44a, 46a der einzelnen ersten und zweiten Dichtelemente 38a, 40a weisen jeweils drei im Wesentlichen geradlinige Seiten auf, wobei sich jeweils zwei der Seiten jeweils direkt oder in einer gedachten Verlängerung dieser/einer dieser Seiten in einem Punkt schneiden und an diesem Punkt einen Winkel kleiner 90°, vorzugsweise kleiner 70° und besonders bevorzugt kleiner 65°, aufspannen. Die ersten Dichtelemente 38a und die zweiten Dichtelemente 40a weisen jeweils senkrecht zur Mittelachse 24a betrachtet um die Mittelachse 24a herum eine gleichbleibende Querschnittsfläche 44a, 46a auf, insbesondere die im Wesentlichen keilförmige Querschnittsfläche 44a, 46a. Die Kontur 68a bildet, insbesondere die einzelnen Seiten der Kontur 68a bilden jeweils, mindestens 70%, vorzugsweise mindestens 80% und besonders bevorzugt mindestens 90%, der Kontur 68a, insbesondere der einzelnen Seiten, des gleichschenkligen Dreiecks deckungsgleich ab. Die ersten Dichtelemente 38a und die zweiten Dichtelemente 40a sind jeweils derart ausgebildet und/oder angeordnet, dass die im Wesentlichen dreieckigen Konturen 68a der Querschnittsflächen 44a der ersten Dichtelemente 38a in einer die Mittelachse 24a umfassenden Schnittebene, insbesondere bezüglich einer Anordnung der Winkel des gleichschenkligen Dreiecks, um im Wesentlichen 180° gedreht zu der im Wesentlichen dreieckigen Kontur 68a der Querschnittsflächen 46a der zweiten Dichtelemente 40a ausgebildet sind. Die Kontur 68a der im Wesentlichen keilförmigen Querschnittsflächen 44a, 46a der ersten Dichtelemente 38a und der zweiten Dichtelemente 40a bildet jeweils zumindest im Wesentlichen ein Dreieck aus, wobei die ersten Dichtelemente 38a und die zweiten Dichtelemente 40a jeweils derart angeordnet und/oder ausgebildet sind, dass zwei Seiten des Dreiecks schräg zur Mittelachse 24a ausgerichtet sind und eine dritte Seite des Dreiecks im Wesentlichen parallel zur Mittelachse 24a ausgerichtet ist. Die Konturen 68a weisen jeweils zumindest drei Seiten auf, die in ihrer räumlichen Ausrichtung, insbesondere in einem Winkel zueinander, deckungsgleich zu den Seiten eines Dreiecks angeordnet sind, wobei sich zwei dieser drei Seiten der jeweiligen Kontur 68a teilweise nicht schneiden. Insbesondere sind die ersten und zweiten Dichtelemente 38a, 40a jeweils derart ausgebildet, dass deren Querschnittsflächen 44a, 46a in einer fiktiven Ecke des Dreiecks einen stumpfförmigen Absatz 70a (in Figur 2 beispielhaft gezeigt) ausbilden.

Die Kontur 68a der im Wesentlichen keilförmigen Querschnittsflächen 44a, 46a der ersten Dichtelemente 38a und der zweiten Dichtelemente 40a ist jeweils derart ausgebildet, dass ein aus zwei schräg zur Mittelachse 24a ausgerichteten Seiten der Kontur 68a aufgespannter, insbesondere von zwei Schenkeln eines durch die Kontur 68a gebildeten gleichschenkligen Dreiecks aufgespannter, Winkel 72a im Wesentlichen 60° beträgt. Die zweiten Dichtelemente 40a weisen jeweils zwei Anlegeflächen 48a auf. Die Anlegeflächen 48a der zweiten Dichtelemente 40a sind jeweils schräg zur Mittelachse 24a ausgebildet. Die Anlegeflächen 48a der zweiten Dichtelemente 40a sind jeweils derart ausgebildet, dass eine Kontur der jeweiligen Anlegefläche 48a in einer die Mittelachse 24a umfassenden Schnittebene (siehe Figur 2) im Wesentlichen geradlinig ausgebildet ist. Die Anlegeflächen 48a der zweiten Dichtelemente 40a sind jeweils derart ausgebildet, dass die jeweilige Anlegefläche 48a in einer die Mittelachse 24a umfassenden Schnittebene in einem von 90° verschiedenen Winkel zur Mittelachse 24a und zu einer die Mittelachse 24a senkrecht schneidenden fiktiven Ebene 74a (in Figur 2 beispielhaft gezeigt) angeordnet ist. Die Anlegeflächen 48a der zweiten Dichtelemente 40a sind jeweils derart ausgebildet, dass eine, insbesondere im Wesentlichen geradlinige, Kontur der jeweiligen Anlegefläche 48a in einer die Mittelachse 24a umfassenden Schnittebene (siehe Bildebene in Figur 2) jeweils zu einer die Mittelachse 24a senkrecht schneidenden fiktiven Ebene 74a in einem Winkel 76a von im Wesentlichen 30° ausgebildet ist (in Figur 2 beispielhaft für eine Anlegefläche 48a gezeigt; analog für die anderen Anlegeflächen 48a, 50a). Die Anlegeflächen 50a der ersten Dichtelemente 38a sind jeweils derart ausgebildet, dass eine, insbesondere im Wesentlichen geradlinige, Kontur der jeweiligen Anlegefläche 50a in einer die Mittelachse 24a umfassenden Schnittebene jeweils zu einer die Mittelachse 24a senkrecht schneidenden fiktiven Ebene in einem Winkel von im Wesentlichen 30° ausgebildet ist.

Die ersten Dichtelemente 38a und die zweiten Dichtelemente 40a sind jeweils derart ausgebildet, dass die Querschnittsfläche 44a, 46a des jeweiligen Dichtelements 38a, 40a im Bereich des Winkels 72a, welcher insbesondere im Wesentlichen 60° beträgt, einen Stumpf, insbesondere den Absatz 70a, aufweist, wobei sich insbesondere die zwei den Winkel 72a aufspannenden Anlegeflächen 48a, 50a des jeweiligen Dichtelements 38a, 40a nicht in einem Punkt schneiden, sondern vorzugsweise lediglich in einem fiktiven Punkt. Dadurch kann vorzugsweise eine höhere Dichtwirkung mit einer dort anzulegenden Fläche, insbesondere der Außenfläche 34a der Stellstange 14a bzw. einer die Ausnehmung 36a begrenzenden Innenfläche des Gehäuseteils 16a, ermöglicht werden.

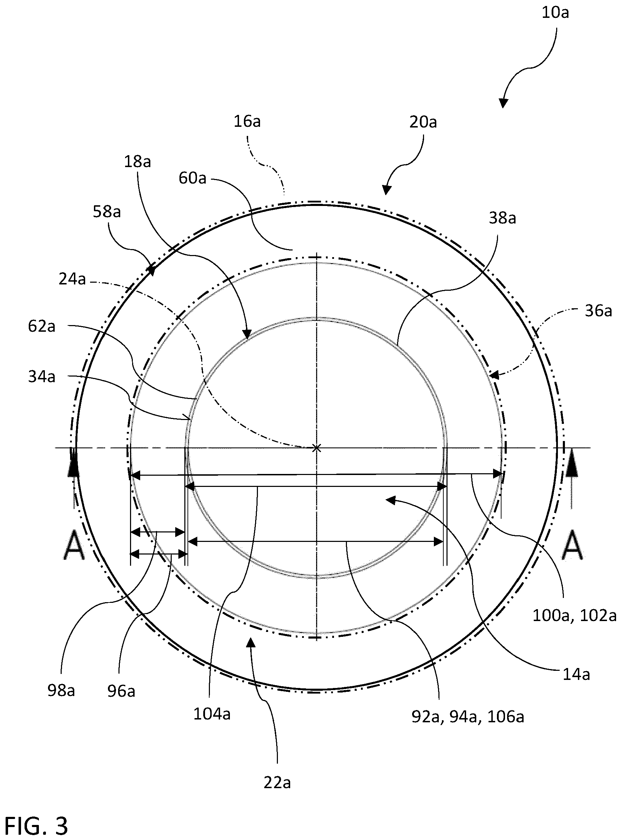

Die ersten Dichtelemente 38a weisen jeweils die zwei Anlegeflächen 50a auf, die jeweils schräg zur Mittelachse 24a ausgebildet sind. Die Anlegeflächen 50a der ersten Dichtelemente 38a sind jeweils derart ausgebildet, dass eine Kontur der jeweiligen Anlegefläche 50a in einer die Mittelachse 24a umfassenden Schnittebene (siehe Bildebene in Figur 2) im Wesentlichen geradlinig ausgebildet ist. Die Anlegeflächen 50a der ersten Dichtelemente 38a sind jeweils derart ausgebildet, dass die jeweilige Anlegefläche 50a in einer die Mittelachse 24a umfassenden Schnittebene in einem von 90° verschiedenen Winkel zur Mittelachse 24a und zu einer die Mittelachse 24a senkrecht schneidenden fiktiven Ebene (parallel zu der beispielhaft gezeigten Ebene 74a ausgebildet) angeordnet ist. Die Anlegeflächen 48a der zweiten Dichtelemente 40a erstrecken sich jeweils im Wesentlichen vollständig um die Mittelachse 24a herum (siehe auch Figur 3). Die Anlegeflächen 50a der ersten Dichtelemente 38a erstrecken sich jeweils im Wesentlichen vollständig um die Mittelachse 24a herum (siehe auch Figur 3).

Das dritte Dichtelement 42a weist an einer der Anschlagfläche 54a zugewandten Seite eine Abstützfläche 78a auf, die im Wesentlichen senkrecht zur Mittelachse 24a ausgebildet ist. Das dritte Dichtelement 42a, insbesondere die Abstützfläche 78a, ist derart ausgebildet und/oder angeordnet, dass eine Kontur der Abstützfläche 78a in einer die Mittelachse 24a umfassenden Schnittebene im Wesentlichen senkrecht zur Mittelachse 24a ausgebildet ist. Die Abstützfläche 78a ist im Wesentlichen eben ausgebildet. Die Abstützfläche 78a erstreckt sich im Wesentlichen vollständig um die Mittelachse 24a herum. Die Anschlagfläche 54a des Gehäuseteils 16a ist im Wesentlichen eben ausgebildet und erstreckt sich vollständig um die Mittelachse 24a. Das dritte Dichtelement 42a liegt über die Abstützfläche 78a flächig an der Anschlagfläche 54a des Gehäuseteils 16a an. Eine parallel zur Mittelachse 24a ausgebildete maximale Höhe 80a des dritten Dichtelements 42a entspricht mindestens einer maximalen Höhe 82a der einzelnen ersten Dichtelemente 38a und der einzelnen zweiten Dichtelemente 40a. Insbesondere ist die maximale Höhe 80a des dritten Dichtelements 42a größer als die maximale Höhe 82a der einzelnen ersten und zweiten Dichtelemente 38a, 40a. Die parallel zur Mittelachse 24a ausgebildete maximale Höhe 82a der einzelnen ersten Dichtelemente 38a und eine parallel zur Mittelachse 24a ausgebildete maximale Höhe 82a der zweiten Dichtelemente 40a sind im Wesentlichen identisch. Die Auflagefläche 56a des dritten Dichtelements 42a ist derart ausgebildet, dass eine Kontur der Auflagefläche 56a in einer die Mittelachse 24a umfassenden Schnittebene im Wesentlichen geradlinig ausgebildet ist. Die Auflagefläche 56a des dritten Dichtelements 42a ist derart ausgebildet, dass die Auflagefläche 56a in einer die Mittelachse 24a umfassenden Schnittebene in einem von 90° verschiedenen Winkel zur Mittelachse 24a und zu einer die Mittelachse 24a senkrecht schneidenden fiktiven Ebene (parallel zu der beispielhaft gezeigten Ebene 74a ausgebildet) angeordnet ist. Die Auflagefläche 56a des dritten Dichtelements 42a ist derart ausgebildet, dass eine, insbesondere im Wesentlichen geradlinige, Kontur der Auflagefläche 56a in einer die Mittelachse 24a umfassenden Schnittebene jeweils zu einer die Mittelachse 24a senkrecht schneidenden fiktiven Ebene in einem Winkel von im Wesentlichen 30° ausgebildet ist. Alternativ ist denkbar, dass das dritte Dichtelement 42a eine Mehrzahl von Abstützflächen 78a aufweist, die insbesondere um die Mittelachse 24a verteilt angeordnet sind, beispielsweise über mehrere Plateaus oder Kanten zu einem Abstützen.

Die Dichtelemente 38a, 40a, 42a der Dichtungseinheit 22a, insbesondere die ersten Dichtelemente38a, die zweiten Dichtelemente 40a und/oder das dritte Dichtelement 42a, sind insbesondere dazu vorgesehen/derart ausgebildet, zu einer Abdichtung des Spalts mit der Außenfläche 34a der Stellstange 14a zusammenzuwirken. Bevorzugt sind die ersten Dichtelemente 38a jeweils dazu vorgesehen/derart ausgebildet, zu einer Abdichtung des Spalts über eine im Wesentlichen parallel zur Mittelachse 24a ausgebildete Dichtfläche 84a mit der Stellstange 14a, insbesondere der Außenfläche 34a der Stellstange 14a, zusammenzuwirken. Vorzugsweise sind die zweiten Dichtelemente 40a jeweils dazu vorgesehen/derart ausgebildet, zu einer Abdichtung des Spalts über den Absatz 70a bzw. eine im Wesentlichen parallel zur Mittelachse 24a ausgebildete Stumpffläche am Absatz 70a, insbesondere an einer durch die zwei schrägen Anlegeflächen 48a des jeweiligen zweiten Dichtelements 40a gebildeten Innenseite des jeweiligen zweiten Dichtelements 40a, mit der Stellstange 14a, insbesondere der Außenfläche 34a der Stellstange 14a, zusammenzuwirken.

Das Übertragungselement 62a ist dazu ausgebildet, die Anpresskraft der Anpresseinheit 58a, insbesondere der Anpresselemente 60a, aufzunehmen und auf die Dichtungseinheit 22a, insbesondere die Dichtelemente 38a, 40a, 42a, zu übertragen. Das Übertragungselement 62a ist entlang der Mittelachse 24a an einem Ende der Dichtungseinheit 22a angeordnet. Das Übertragungselement 62a weist senkrecht zur Mittelachse 24a betrachtet eine schräg zur Mittelachse 24a ausgerichtete Übertragungsfläche 86a auf, die an einem der ersten Dichtelemente 38a anliegt. Alternativ ist denkbar, dass die Dichtungseinheit 22a eine Mehrzahl von Übertragungselementen 62a aufweist. Alternativ oder zusätzlich ist denkbar, dass das/die Übertragungselem€(e) 62a an einem zweiten Dichtelement 40a anliegt. Das Übertragungselement 62a ist aus einem Metall, insbesondere aus Edelstahl, ausgebildet. Die Übertragungsfläche 86a des Übertragungselements 62a ist derart ausgebildet, dass eine Kontur der Übertragungsfläche 86a in einer die Mittelachse 24a umfassenden Schnittebene im Wesentlichen geradlinig ausgebildet ist. Die Übertragungsfläche 86a des Übertragungselements 62a ist derart ausgebildet, dass die Übertragungsfläche 86a in einer die Mittelachse 24a umfassenden Schnittebene in einem von 90° verschiedenen Winkel zur Mittelachse 24a und zu einer die Mittelachse 24a senkrecht schneidenden fiktiven Ebene angeordnet ist. Die Übertragungsfläche 86a des Übertragungselements 62a ist korrespondierend zu einer Anlegefläche 50a eines der ersten Dichtelemente 38a ausgebildet, das insbesondere an dem Übertragungselement 62a anliegt bzw. dazu vorgesehen ist, an dem Übertragungselement 62a angelegt zu werden. Vorzugsweise sind die Übertragungsfläche 86a und die Anlegefläche 50a des an dem Übertragungselement 62a angelegten bzw. anzulegenden ersten Dichtelements 38a im Wesentlichen identisch ausgebildet. Bevorzugt liegen die Übertragungsfläche 86a und die Anlegefläche 50a des an dem Übertragungselement 62a angelegten bzw. anzulegenden ersten Dichtelements 38a im Wesentlichen vollflächig aneinander an. Die Übertragungsfläche 86a des Übertragungselements 62a ist derart ausgebildet, dass eine, insbesondere im Wesentlichen geradlinige, Kontur der Übertragungsfläche 86a in einer die Mittelachse 24a umfassenden Schnittebene jeweils zu einer die Mittelachse 24a senkrecht schneidenden fiktiven Ebene in einem Winkel von im Wesentlichen 30° ausgebildet ist. Das Übertragungselement 62a und das dritte Dichtelement 42a sind an zwei, insbesondere entlang der Mittelachse 24a, entgegengesetzt zueinander ausgebildeten Enden der Dichtungseinheit 22a angeordnet.

Das Übertragungselement 62a weist parallel zur Mittelachse 24a eine maximale Höhe 88a auf, die kleiner ist als die maximale Höhe 82a der einzelnen Dichtelemente 38a, 40a, 42a der Dichtungseinheit 22a, insbesondere der einzelnen ersten Dichtelemente 38a, zweiten Dichtelemente 40a und des dritten Dichtelements 42a. Alternativ ist denkbar, dass die maximale Höhe 88a des Übertragungselements 62a gleich oder größer ist als die maximale Höhe 82a der einzelnen Dichtelemente 38a, 40a, 42a der Dichtungseinheit 22a, insbesondere der einzelnen ersten Dichtelemente 38a, zweiten Dichtelemente 40a und des dritten Dichtelements 42a. Die maximale Höhe 88a des Übertragungselements 62a, insbesondere parallel zur Mittelachse, beträgt mindestens 2,5 mm, vorzugsweise mindestens 3 mm und besonders bevorzugt mindestens 3,5 mm. Die Dichtelemente 38a, 40a, 42a der Dichtungseinheit 22a, insbesondere die ersten Dichtelemente 38a, die zweiten Dichtelemente 40a und das dritte Dichtelement 40a, weisen zusammen parallel zur Mittelachse 24a eine maximale Höhe 90a von mindestens 15 mm, vorzugsweise mindestens 16 mm und besonders bevorzugt mindestens 20 mm, auf.

Die ersten Dichtelemente 38a und die zweiten Dichtelemente 40a weisen jeweils die maximale Höhe 82a auf, wobei ein Verhältnis der maximalen Höhe 90a der Dichtelemente 38a, 40a, 42a der Dichtungseinheit 22a zusammen und der maximalen Höhe 82a der einzelnen ersten Dichtelemente 38a bzw. zweiten Dichtelemente 40a mindestens 2, vorzugsweise mindestens 2,4 und besonders bevorzugt mindestens 2,6, beträgt. Die Dichtungseinheit 22a weist, insbesondere senkrecht zur Mittelachse 24a, einen minimalen Innendurchmesser 92a auf, der insbesondere im Wesentlichen einem Durchmesser 94a der Stellstange 14a entspricht. Die maximale Höhe 90a der Dichtelemente 38a, 40a, 42a der Dichtungseinheit 22a, insbesondere der ersten Dichtelemente 38a, der zweiten Dichtelemente 40a und des dritten Dichtelements 42a, zusammen entspricht mindestens 50 % des minimalen Innendurchmessers 92a der Dichtungseinheit 22a. Die ersten Dichtelemente 38a und die zweiten Dichtelemente 40a weisen jeweils parallel zur Mittelachse 24a eine im Wesentlichen identische maximale Höhe 82a auf. Das dritte Dichtelement 42a und das Übertragungselement 62a erstrecken sich jeweils im Wesentlichen vollständig um die Mittelachse 24a.

Figur 3 zeigt eine schematische Draufsicht der Dichtungsvorrichtung 20a, insbesondere ohne das Gehäuseteil 16a im Ganzen. Die Dichtelemente 38a, 40a, 42a der Dichtungseinheit 22a erstrecken sich jeweils vollständig um die Mittelachse 24a herum. Die Dichtelemente 38a, 40a, 42a der Dichtungseinheit 22a, insbesondere alle Dichtelemente 38a, 40a, 42a der Dichtungseinheit 22a, weisen jeweils zur Mittelachse 24a eine im Wesentlichen identische maximale radiale Erstreckung 96a auf. Die Dichtelemente 38a, 40a, 42a der Dichtungseinheit 22a weisen jeweils um die Mittelachse 24a eine im Wesentlichen gleichbleibende maximale radiale Erstreckung 96a auf.

Die ersten Dichtelemente 38a und die zweiten Dichtelemente 40a, vorzugsweise alle Dichtelemente 38a, 40a, 42a der Dichtungseinheit 22a, sind, insbesondere in einem montierten Zustand der Dichtungsvorrichtung 20a, derart ausgebildet und/oder angeordnet, dass die ersten Dichtelemente 38a und die zweiten Dichtelemente 40a bzw. die Dichtelemente 38a, 40a, 42a entlang der Mittelachse 24a betrachtet kongruent zueinander ausgebildet sind. Die ersten Dichtelemente 38a und die zweiten Dichtelemente 40a sind, insbesondere in einem montierten Zustand der Dichtungsvorrichtung 20a, derart ausgebildet und/oder angeordnet, dass die ersten Dichtelemente 38a und die zweiten Dichtelemente 40a entlang der Mittelachse 24a betrachtet einander vollständig abdeckend hintereinander angeordnet sind.

Die Dichtelemente 38a, 40a, 42a der Dichtungseinheit 22a, insbesondere die ersten Dichtelemente 38a, die zweiten Dichtelemente 40a und das dritte Dichtelement 42a, weisen jeweils eine maximale radiale Erstreckung 96a relativ zur Mittelachse 24a auf, die vorzugsweise größer ist als eine maximale radiale Erstreckung 98a des Übertragungselements 62a relativ zur Mittelachse 24a (siehe auch Figur 2). Ein maximaler Durchmesser 100a der einzelnen Dichtelemente 38a, 40a, 42a der Dichtungseinheit 22a, insbesondere der einzelnen ersten Dichtelemente 38a, zweiten Dichtelemente 40a und des dritten Dichtelements 42a, entspricht einem maximalen Durchmesser 102a des Übertragungselements 62a. Das Übertragungselement 62a weist eine lichte Weite 104a auf, die größer ist als eine lichte Weite 106a der einzelnen Dichtelemente 38a, 40a, 42a der Dichtungseinheit 22a, insbesondere der einzelnen ersten Dichtelemente 38a, zweiten Dichtelemente 40a und des dritten Dichtelements 42a.

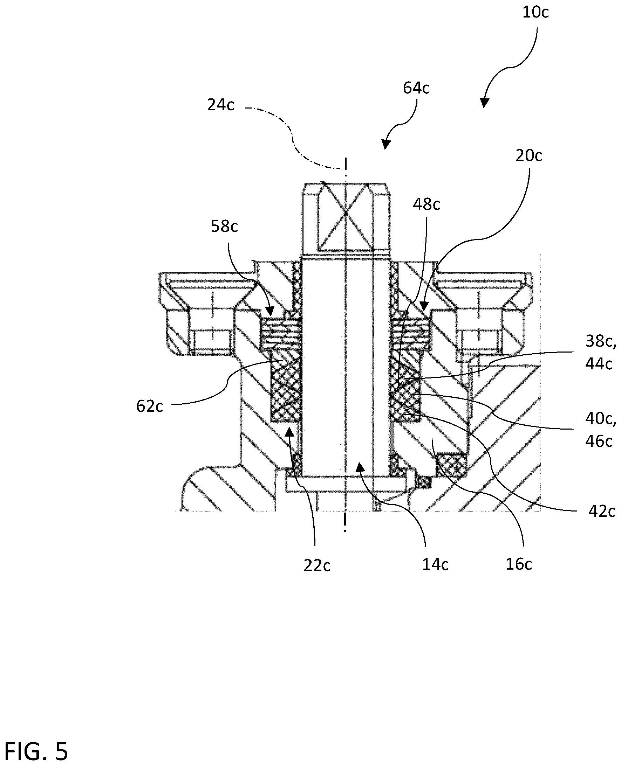

In den Figuren 4 und 5 sind weitere Ausführungsbeispiele der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a jeweils durch den Buchstaben b und c ersetzt.

In Figur 4 ist eine schematische Schnittansicht einer alternativen Ausgestaltung einer Dichtungsvorrichtung 20b für ein Stellgerät 10b gezeigt. Die Dichtungsvorrichtung 20b umfasst eine Dichtungseinheit 22b zu einem Abdichten eines durch ein Gehäuseteil 16b des Stellgeräts 10b und eine Stellstange 14b, insbesondere eine Hubstange oder eine Welle, des Stellgeräts 10b ausgebildeten Spalts gegenüber gasförmigen oder flüssigen Medien, insbesondere Helium. Die Dichtungsvorrichtung 20b umfasst eine Mittelachse 24b, wobei die Dichtungseinheit 22b eine Mehrzahl von im Wesentlichen ringförmig ausgebildeten Dichtelementen 38b, 40b, 42b umfasst, die entlang der Mittelachse 24b hintereinander und jeweils um die Mittelachse 24b angeordnet sind. Die Mehrzahl der Dichtelemente 38b, 40b, 42b umfasst zumindest zwei, insbesondere zwei, erste Dichtelemente 38b und zumindest ein, insbesondere ein, zweites Dichtelement 40b, wobei die ersten Dichtelemente 38b und das zweite Dichtelement 40b jeweils senkrecht zur Mittelachse 24b betrachtet eine im Wesentlichen keilförmige Querschnittsfläche 44b, 46b aufweisen. Das zweite Dichtelement 40b ist entlang der Mittelachse 24b zwischen den zwei ersten Dichtelementen 38b angeordnet und liegt jeweils über eine schräg zur Mittelachse 24b ausgebildete Anlegefläche 48b des zweiten Dichtelements 40b an den zwei ersten Dichtelementen 38b an. Die Mehrzahl der Dichtelemente 38b, 40b, 42b sind jeweils im Wesentlichen vollständig aus einem Kunststoff, vorzugsweise einem Polymer, ausgebildet. Im Unterschied zu der in den Figuren 1 bis 3 gezeigten Dichtungsvorrichtung 20a umfasst die Dichtungseinheit 22b der in Figur 4 gezeigten Dichtungsvorrichtung 20b lediglich zwei erste Dichtelemente 38b und lediglich ein zweites Dichtelement 40b. Die Dichtungsvorrichtung 20b umfasst, insbesondere analog zu der in den Figuren 1 bis 3 gezeigten Dichtungsvorrichtung 20a, genau ein Übertragungselement 62b und genau ein drittes Dichtelement 42b. Insbesondere sind das Übertragungselement 62b und das dritte Dichtelement 42b jeweils im Wesentlichen identisch zu dem Übertragungselement 62a bzw. dem dritten Dichtelement 42a der in den Figuren 1 bis 3 gezeigten Dichtungsvorrichtung 20a ausgebildet. Es sind aber auch andere Ausgestaltungen des Übertragungselements 62b und des dritten Dichtelements 42b denkbar. Die in der Figur 4 gezeigten Dichtelemente 38b, 40b, 42b der Dichtungseinheit 22b sind sonst analog zu den Dichtelementen 38a, 40a, 42a der Dichtungseinheit 22a der in den Figuren 1 bis 3 gezeigten Dichtungsvorrichtung 20a ausgebildet.

In Figur 5 ist eine schematische Schnittansicht einer weiteren alternativen Ausgestaltung einer Dichtungsvorrichtung 20c für ein Stellgerät 10c gezeigt. Die Dichtungsvorrichtung 20c umfasst eine Dichtungseinheit 22c zu einem Abdichten eines durch ein Gehäuseteil 16c des Stellgeräts 10c und eine Stellstange 14c, insbesondere eine Hubstange oder eine Welle, des Stellgeräts 10c ausgebildeten Spalts gegenüber gasförmigen oder flüssigen Medien, insbesondere Helium. Die Dichtungsvorrichtung 20c umfasst eine Mittelachse 24c, wobei die Dichtungseinheit 22c eine Mehrzahl von im Wesentlichen ringförmig ausgebildeten Dichtelementen 38c, 40c, 42c umfasst, die entlang der Mittelachse 24c hintereinander und jeweils um die Mittelachse 24c angeordnet sind. Die Mehrzahl der Dichtelemente 38c, 40c, 42c umfasst ein erstes Dichtelement 38c und ein zweites Dichtelement 40c, wobei das erste Dichtelement 38c und das zweite Dichtelement 40c jeweils senkrecht zur Mittelachse 24c betrachtet eine im Wesentlichen keilförmige Querschnittsfläche 44c, 46c aufweisen. Das zweite Dichtelement 40c ist entlang der Mittelachse 24c zwischen dem ersten Dichtelement 38b und einem dritten Dichtelement 42c der Dichtungseinheit 22c angeordnet und liegt jeweils über eine schräg zur Mittelachse 24c ausgebildete Anlegefläche 48c des zweiten Dichtelements 40c an dem ersten Dichtelement 38c und dem dritten Dichtelement 42c an. Die Mehrzahl der Dichtelemente 38c, 40c, 42c sind jeweils im Wesentlichen vollständig aus einem Kunststoff, vorzugsweise einem Polymer, ausgebildet. Im Unterschied zu der in den Figuren 1 bis 3 gezeigten Dichtungsvorrichtung 20a umfasst die Dichtungseinheit 22c der in Figur 5 gezeigten Dichtungsvorrichtung 20c lediglich ein erstes Dichtelement 38c und lediglich ein zweites Dichtelement 40c, wobei das erste Dichtelement 38c an einem Übertragungselement 62c der Dichtungseinheit 22c anliegt. Die Dichtungsvorrichtung 20c umfasst, insbesondere analog zu der in den Figuren 1 bis 3 gezeigten Dichtungsvorrichtung 20a, genau ein Übertragungselement 62c und genau ein drittes Dichtelement 42c. Die in der Figur 5 gezeigten Dichtelemente 38c, 40c, 42c der Dichtungseinheit 22c sind im Wesentlichen analog zu den Dichtelementen 38a, 40a, 42a der Dichtungseinheit 22a der in den Figuren 1 bis 3 gezeigten Dichtungsvorrichtung 20a ausgebildet.

**Bezugszeichen**

| | | | |
|---|---|---|---|
| 10 | Stellgerät | 60 | Anpresselement |
| 12 | Stellglied | 62 | Übertragungselement |
| 14 | Stellstange | 64 | Zugangsseite |
| 16 | Gehäuseteil | 66 | Abdeckelement |
| 18 | Durchführung | 68 | Kontur |
| 20 | Dichtungsvorrichtung | 70 | Absatz |
| 22 | Dichtungseinheit | 72 | Winkel |
| 24 | Mittelachse | 74 | Ebene |
| 26 | Einlasskanal | 76 | Winkel |
| 28 | Auslasskanal | 78 | Abstützfläche |
| 30 | Gehäuse | 80 | Höhe |
| 32 | Kammer | 82 | Höhe |
| 34 | Außenfläche | 84 | Dichtfläche |
| 36 | Ausnehmung | 86 | Übertragungsfläche |
| 38 | Erstes Dichtelement | 88 | Höhe |
| 40 | Zweites Dichtelement | 90 | Höhe |
| 42 | Drittes Dichtelement | 92 | Innendurchmesser |
| 44 | Querschnittsfläche | 94 | Durchmesser |
| 46 | Querschnittsfläche | 96 | Radiale Erstreckung |
| 48 | Anlegefläche | 98 | Radiale Erstreckung |
| 50 | Anlegefläche | 100 | Durchmesser |
| 54 | Anschlagfläche | 102 | Durchmesser |
| 56 | Auflagefläche | 104 | Lichte Weite |
| 58 | Anpresseinheit | 106 | Lichte Weite |

## Patentansprüche

1. Dichtungsvorrichtung für ein Stellgerät (10a; 10b), insbesondere ein Dreh- oder Hubventil, mit einer Dichtungseinheit (22a; 22b) zu einem Abdichten eines durch ein Gehäuseteil (16a; 16b) des Stellgeräts (10a; 10b) und eine Stellstange (14a; 14b), insbesondere eine Hubstange oder eine Welle, des Stellgeräts (10a; 10b) ausgebildeten Spalts gegenüber gasförmigen oder flüssigen Medien, insbesondere Helium, und mit einer Mittelachse (24a; 24b), wobei die Dichtungseinheit (22a; 22b) eine Mehrzahl von im Wesentlichen ringförmig ausgebildeten Dichtelementen (38a, 40a, 42a; 38b, 40b, 42b) umfasst, die entlang der Mittelachse (24a; 24b) hintereinander und jeweils um die Mittelachse (24a; 24b) angeordnet sind, wobei die Mehrzahl der Dichtelemente (38a, 40a, 42a; 38b, 40b, 42b) zumindest ein erstes Dichtelement (38a; 38b) und zumindest ein zweites Dichtelement (40a; 40b) umfasst, wobei das zumindest eine erste Dichtelement (38a; 38b) und das zumindest eine zweite Dichtelement (40a; 40b) jeweils senkrecht zur Mittelachse (24a; 24b) betrachtet eine im Wesentlichen keilförmige Querschnittsfläche (44a, 46a; 44b, 46b) aufweisen, wobei das zumindest eine zweite Dichtelement (40a; 40b) über eine schräg zur Mittelachse (24a; 24b) ausgebildete Anlegefläche (48a; 48b) des zumindest einen zweiten Dichtelements (40a; 40b) an dem zumindest einen ersten Dichtelement (38a; 38b) anliegt, wobei die Mehrzahl der Dichtelemente (38a, 40a, 42a; 38b, 40b, 42b) jeweils zumindest größtenteils, insbesondere im Wesentlichen vollständig, aus einem Kunststoff, vorzugsweise einem Polymer, ausgebildet sind.

2. Dichtungsvorrichtung nach Anspruch 1, **dadurch gekennzeichnet, dass** die Mehrzahl der Dichtelemente (38a, 40a, 42a; 38b, 40b, 42b) ein drittes Dichtelement (42a; 42b) umfasst, das zu einem Anlegen an eine Anschlagfläche (54a; 54b) des Gehäuseteils (16a; 16b) vorgesehen ist, wobei das dritte Dichtelement (42a; 42b) entlang der Mittelachse (24a; 24b) an einem Endbereich der Dichtungseinheit (22a; 22b) angeordnet ist und über eine schräg zur Mittelachse (24a; 24b) ausgebildete Auflagefläche (56a; 56b) des dritten Dichtelements (42a; 42b) an einem der anderen Dichtelemente (38a, 40a; 38b, 40b) der Dichtungseinheit (22a; 22b) anliegt, wobei vorzugsweise das dritte Dichtelement (42a; 42b) zumindest größtenteils, insbesondere im Wesentlichen vollständig, aus einem Kunststoff, insbesondere aus dem gleichen Material wie das zumindest eine Dichtelement (38a; 38b) und das zumindest eine zweite Dichtelement (40a; 40b), ausgebildet ist.

3. Dichtungsvorrichtung nach Anspruch 1 oder 2, **dadurch gekennzeichnet, dass** die im Wesentlichen keilförmige(n) Querschnittsfläche(n) (44a, 46a; 44b, 46b) des zumindest einen ersten Dichtelements (38a; 38b) und/oder des zumindest einen zweiten Dichtelements (40a; 40b) jeweils eine Kontur (68a; 68b) aufweist/aufweisen, die zumindest bereichsweise, insbesondere vollständig, ein gleichschenkliges Dreieck ausbildet.

4. Dichtungsvorrichtung nach einem der vorhergehenden Ansprüche, **dadurch gekennzeichnet, dass** die im Wesentlichen keilförmigen Querschnittsflächen (44a, 46a; 44b, 46b) des zumindest einen ersten Dichtelements (38a; 38b) und des zumindest einen zweiten Dichtelements (40a; 40b) jeweils eine Kontur (68a; 68b) aufweisen, die zumindest im Wesentlichen ein Dreieck ausbildet, wobei das zumindest eine erste Dichtelement (38a; 38b) und das zumindest eine zweite Dichtelement (40a; 40b) jeweils derart angeordnet und/oder ausgebildet sind, dass zwei Seiten des Dreiecks schräg zur Mittelachse (24a; 24b) ausgerichtet sind und eine dritte Seite des Dreiecks im Wesentlichen parallel zur Mittelachse (24a; 24b) ausgerichtet ist.

5. Dichtungsvorrichtung nach einem der vorhergehenden Ansprüche, **dadurch gekennzeichnet, dass,** die im Wesentlichen keilförmige(n) Querschnittsfläche(n) (44a, 46a; 44b, 46b) des zumindest einen ersten Dichtelements (38a; 38b) und/oder des zumindest einen zweiten Dichtelements (40a; 40b) jeweils eine Kontur (68a; 68b) aufweist/aufweisen, wobei ein aus zwei schräg zur Mittelachse (24a; 24b) ausgerichteten Seiten der Kontur (68a; 68b) aufgespannter, insbesondere von zwei Schenkeln eines durch die Kontur (68a; 68b) gebildeten gleichschenkligen Dreiecks aufgespannter, Winkel (72a; 72b) einen Wert aus einem Winkelbereich zwischen 50° und 70° aufweist, vorzugsweise von im Wesentlichen 60° beträgt.

6. Dichtungsvorrichtung nach einem der vorhergehenden Ansprüche, **dadurch gekennzeichnet, dass** der Kunststoff, insbesondere das Polymer, als R-PTFE, M-PTFE oder TFM ausgebildet ist.

7. Dichtungsvorrichtung nach einem der vorhergehenden Ansprüche, **gekennzeichnet durch** eine Anpresseinheit (58a; 58b), die dazu ausgebildet ist, die Dichtungseinheit (22a; 22b) zu einem Abdichten des Spalts mit einer Anpresskraft zu beaufschlagen, wobei die Anpresseinheit (58a; 58b) zumindest ein Anpresselement (60a; 60b) umfasst, das eine im Wesentlichen parallel zur Mittelachse (24a; 24b) gerichtete Anpresskraft auf die Dichtungseinheit (22a; 22b), insbesondere auf ein Übertragungselement (62a; 62b) der Dichtungseinheit (22a; 22b), überträgt, wobei die Anpresseinheit (58a; 58b), insbesondere das zumindest eine Anpresselement (60a; 60b), derart ausgebildet ist, dass die Anpresskraft auf die Dichtungseinheit (22a; 22b) mindestens 15 N/mm² beträgt.

8. Dichtungsvorrichtung nach einem der vorhergehenden Ansprüche, **gekennzeichnet durch** eine Anpresseinheit (58a; 58b), die dazu ausgebildet ist, die Dichtungseinheit (22a; 22b) zu einem Abdichten des Spalts mit einer Anpresskraft zu beaufschlagen, wobei die Anpresseinheit (58a; 58b) zumindest ein Anpresselement (60a; 60b) umfasst, das eine im Wesentlichen parallel zur Mittelachse (24a; 24b) ausgerichtete Anpresskraft auf die Dichtungseinheit (22a; 22b), insbesondere auf ein Übertragungselement (62a; 62b) der Dichtungseinheit (22a; 22b), überträgt, wobei das zumindest eine Anpresselement (60a; 60b) als eine Feder, insbesondere als eine Druckfeder oder als eine Tellerfeder, ausgebildet ist und über eine Seite des Anpresselements (60a; 60b) an der Dichtungseinheit (22a; 22b), insbesondere an dem Übertragungselement (62a; 62b) der Dichtungseinheit (22a; 22b), anliegt.

9. Dichtungsvorrichtung nach einem der vorhergehenden Ansprüche, **dadurch gekennzeichnet, dass** die Dichtungseinheit (22a; 22b) zumindest ein Übertragungselement (62a; 62b) umfasst, das dazu ausgebildet ist, eine Anpresskraft einer Anpresseinheit (58a; 58b) der Stellgeräts (10a; 10b) oder der Dichtungsvorrichtung (20a; 20b) aufzunehmen und auf die Dichtelemente (38a, 40a, 42a; 38b, 40b, 42b) zu übertragen, wobei das Übertragungselement (62a; 62b) entlang der Mittelachse (24a; 24b) an einem Ende der Dichtungseinheit (22a; 22b) angeordnet ist, wobei das Übertragungselement (62a; 62b) senkrecht zur Mittelachse (24a; 24b) betrachtet eine schräg zur Mittelachse (24a; 24b) ausgerichtete Übertragungsfläche (86a; 86b) aufweist, die an dem zumindest einen ersten Dichtelement (38a; 38b) oder dem zumindest einen zweiten Dichtelement (40a; 40b) anliegt.

10. Dichtungsvorrichtung nach einem der vorhergehenden Ansprüche, **dadurch gekennzeichnet, dass** die Dichtungseinheit (22a; 22b) zumindest ein Übertragungselement (62a; 62b) umfasst, das dazu ausgebildet ist, eine Anpresskraft einer Anpresseinheit (58a; 58b) des Stellgeräts (10a; 10b) oder der Dichtungsvorrichtung (20a; 20b) aufzunehmen und auf die Dichtelemente (38a, 40a, 42a; 38b, 40b, 42b) zu übertragen, wobei das Übertragungselement (62a; 62b) entlang der Mittelachse (24a; 24b) an einem Ende der Dichtungseinheit (22a; 22b) angeordnet ist, wobei das Übertragungselement (62a; 62b) aus einem Metall, insbesondere aus Edelstahl, ausgebildet ist.

11. Dichtungsvorrichtung nach einem der vorhergehenden Ansprüche, **dadurch gekennzeichnet, dass** die Dichtelemente (38a, 40a, 42a; 38b, 40b, 42b) der Dichtungseinheit (22a; 22b), insbesondere zumindest das zumindest eine erste Dichtelement (38a; 38b) und das zumindest eine zweite Dichtelement (40a; 40b), zusammen parallel zur Mittelachse (24a; 24b) eine maximale Höhe (90a; 90b) von mindestens 15 mm aufweisen.

12. Stellgerät, insbesondere Dreh- oder Hubventil, vorzugsweise für eine prozesstechnische Anlage, mit einer Stellstange (14a; 14b), insbesondere einer Hubstange oder einer Welle, zu einem Bewegen eines Stellglieds (12a) über einen mit der Stellstange (14a; 14b) wirkverbundenen Antrieb, mit zumindest einem Gehäuseteil (16a; 16b), das eine Durchführung (18a; 18b) für eine Aufnahme der Stellstange (14a; 14b) begrenzt, und mit einer Dichtungsvorrichtung (20a; 20b) nach einem der vorhergehenden Ansprüche, wobei die Dichtungseinheit (22a; 22b) der Dichtungsvorrichtung (20a; 20b) dazu vorgesehen ist, im Wesentlichen vollständig zwischen dem Gehäuseteil (16a; 16b) und der Stellstange (14a; 14b) angeordnet zu werden.

13. Stellgerät nach Anspruch 12, **dadurch gekennzeichnet, dass** das Gehäuseteil (16a; 16b) eine Zugangsseite (64a; 64b) aufweist, von der aus die Dichtungsvorrichtung (20a; 20b) zumindest teilweise einsetzbar ist, wobei das Gehäuseteil (16a; 16b) eine zur Zugangsseite (64a; 64b) geöffnete Ausnehmung (36a; 36b) an der Durchführung (18a; 18b) ausbildet, wobei die Dichtungseinheit (22a; 22b) zumindest größtenteils innerhalb der Ausnehmung (36a; 36b) angeordnet ist, wobei eine Anpresseinheit (58a; 58b), insbesondere zumindest ein Anpresselement (60a; 60b) einer Anpresseinheit (58a; 58b), der Dichtungsvorrichtung (20a; 20b) an einer der Zugangsseite (64a; 64b) zugewandten Seite der Dichtungseinheit (22a; 22b) an der Dichtungseinheit (22a; 22b), insbesondere an einem Übertragungselement (62a; 62b) der Dichtungseinheit (22a; 22b), angeordnet ist.
